(19) Europäisches Patentamt / European Patent Office / Office européen des brevets

(11) **EP 1 713 055 B1**

(12) **EUROPEAN PATENT SPECIFICATION**

(45) Date of publication and mention
of the grant of the patent:
**27.03.2013  Bulletin 2013/13**

(21) Application number: **04818935.1**

(22) Date of filing: **17.11.2004**

(51) Int Cl.:
*G09G 3/34* (2006.01)          *G09G 3/36* (2006.01)
*G02F 1/133* (2006.01)

(86) International application number:
**PCT/JP2004/017102**

(87) International publication number:
**WO 2005/050614 (02.06.2005 Gazette 2005/22)**

(54) **LUMINANCE ADJUSTMENT METHOD, LIQUID CRYSTAL DISPLAY DEVICE, AND COMPUTER PROGRAM**

LUMINANZEINSTELLVERFAHREN, FLÜSSIGKRISTALLANZEIGEEINRICHTUNG UND COMPUTERPROGRAMM

PROCEDE DE REGLAGE DE LA LUMINANCE, AFFICHEUR A CRISTAUX LIQUIDES, ET PROGRAMME INFORMATIQUE

(84) Designated Contracting States:
**AT BE BG CH CY CZ DE DK EE ES FI FR GB GR HU IE IS IT LI LU MC NL PL PT RO SE SI SK TR**

(30) Priority: **19.11.2003   JP 2003389900**

(43) Date of publication of application:
**18.10.2006   Bulletin 2006/42**

(73) Proprietor: **EIZO NANAO CORPORATION
Hakusan-shi
Ishikawa 924-8566 (JP)**

(72) Inventor: **SAKAI, Yoshikazu,
c/o EIZO NANAO CORPORATION,
Hakusan-shi,
Ishikawa 9248566 (JP)**

(74) Representative: **de Beaumont, Michel
Cabinet Beaumont
1, rue Champollion
38000 Grenoble (FR)**

(56) References cited:
**EP-A- 0 861 017          EP-A- 0 883 103
JP-A- 9 043 569          JP-A- 10 222 129
JP-A- 2000 315 594          JP-A- 2002 099 238
JP-U- 5 008 900          US-A1- 2001 008 395
US-A1- 2003 174 262          US-B1- 6 297 791**

**Description**

TECHNICAL FIELD

The present invention relates to: a luminance control method for a liquid crystal display device comprising a liquid crystal panel and a backlight disposed at the back of the liquid crystal panel; a liquid crystal display device to which the luminance control method is applied; and a computer program for realizing the luminance control method with a computer.

BACKGROUND ART

A liquid crystal display device displays an image by controlling On/Off of each pixel in a liquid crystal panel on the basis of a video signal inputted from a personal computer (which will be hereinafter referred to as a PC) or the like and by applying to each pixel a data voltage according to the video signal with a built-in gate driver and a built-in source driver so as to control light transmittance determined by an electrooptical characteristic of a liquid crystal material.

The electrooptical characteristic of a liquid crystal material is determined by the distance between facing substrates, i.e. a liquid crystal gap, as well as the characteristics of the liquid crystal material itself (e.g. birefringent index). More specifically, in a case of a TN (Twisted Nematic) liquid crystal, for example, the transmission intensity I is determined by a per se known expression (1) using a parameter of a product of the birefringent index $\Delta n$ and the liquid crystal gap d of the TN liquid crystal, i.e. the retardation $\Delta n \cdot d$. It should be noted that the liquid crystal gap d is generally designed to be the first local minimum point ($(2 \cdot \Delta n \cdot d)/\lambda = \sqrt{3}$, $\lambda$: wavelength) of the expression (1).

$$I = I_0 \frac{\sin^2\left(\frac{\pi}{2}\sqrt{1+\left(\frac{2 \cdot \Delta n \cdot d}{\lambda}\right)^2}\right)}{1+\left(\frac{2 \cdot \Delta n \cdot d}{\lambda}\right)^2} \qquad \text{... expression (1)}$$

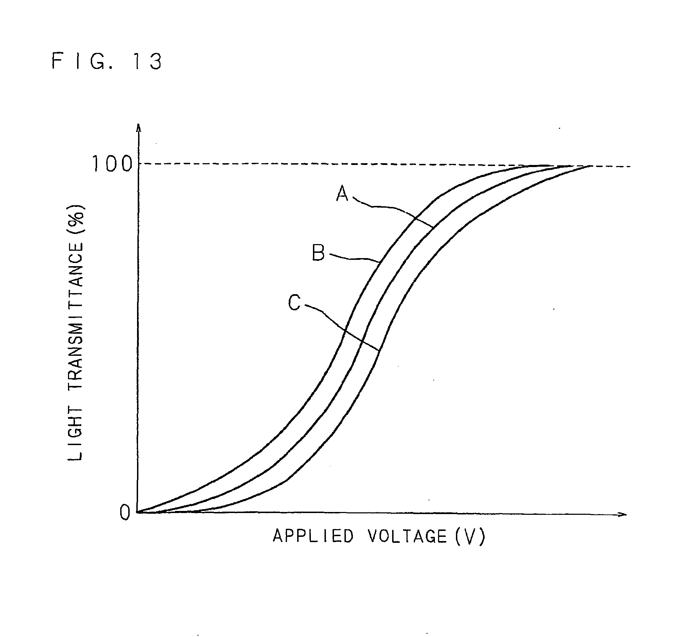

FIG. 13 is a graph showing an example of the electrooptical characteristic of a liquid crystal material, wherein the abscissa axis denotes the voltage applied to the liquid crystal material while the ordinate axis denotes the light transmittance of the liquid crystal material. Referring to FIG. 13, a continuous line A denotes a characteristic obtained when the liquid crystal gap d satisfies $d = \lambda \cdot \sqrt{3}/(2 \cdot \Delta n)$, a continuous line B denotes a characteristic obtained when the liquid crystal gap d satisfies $d < \lambda \cdot \sqrt{3}/(2 \cdot \Delta n)$ and a continuous line C denotes a characteristic obtained when the liquid crystal gap d satisfies $d > \lambda \cdot \sqrt{3}/(2 \cdot \Delta n)$, and it is understood that the light transmittance, which is an important quality, changes as the liquid crystal gap d changes, as shown by the above expression (1). Thus, the liquid crystal gap d, which is a parameter for determining the light transmittance of a liquid crystal display device, might be narrower or wider than a designed value due to a variation in manufacture, causing a problem that a desired light transmittance cannot be obtained and an intended gray-level display cannot be provided.

Known as a solution for this problem is a liquid crystal display device comprising a memory for storing a look-up table (which will be hereinafter referred to as an LUT) in which a gray level represented by the inputted video signal is associated with an input level to a liquid crystal panel corresponding to the gray level, whereby a desired gray-level characteristic can be realized by converting a gray level into an input level on the basis of the LUT and correcting specific characteristics of the device (see, for example, Patent Document 1).

The liquid crystal display device disclosed in the Patent Document 1 measures a luminance in each input level with an external photosensor (luminance meter) provided at the front of the liquid crystal panel and evaluates an actual panel gray-level characteristic of the liquid crystal panel. A gray level and an input level, which are to be written into the LUT, are calculated from the measured panel gray-level characteristic and the desired ideal gray-level characteristic, and stored in the LUT.

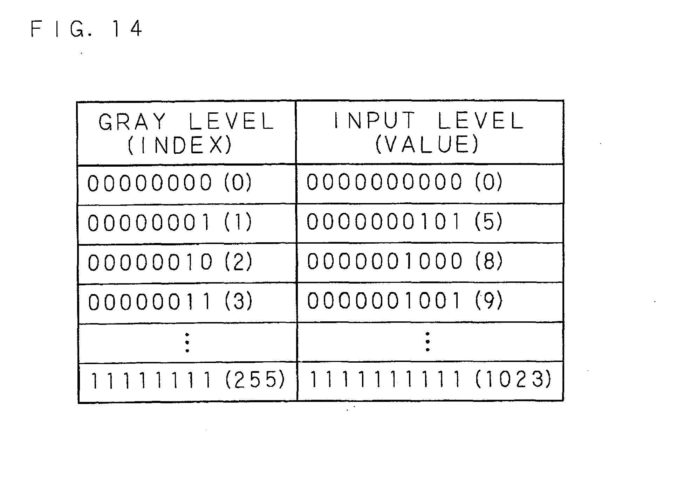

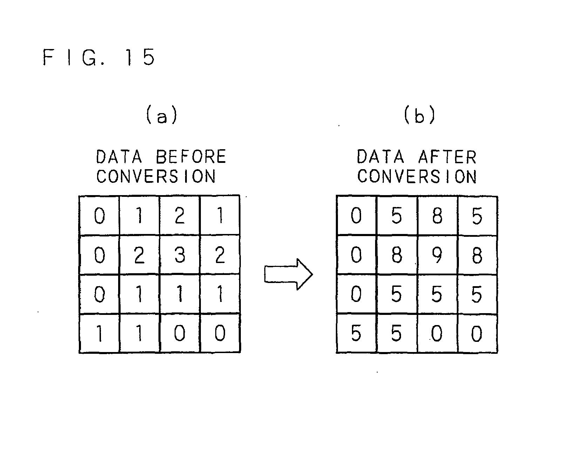

FIG. 14 is a concept view showing an example of the content of the LUT. The LUT stores a gray level as an index associated with an input level as a value. It should be noted that shown is an example wherein the number of gray levels is 8 bits (256) and the input level is 10 bits (1024), i.e. 2 bits larger than the number of gray levels. The LUT stores a gray level "0" associated with an input level "0", a gray level "1" associated with an input level "5", a gray level "2" associated with an input level "8", ..., and a gray level "255" associated with an input level "1023". As shown in FIG. 15, the liquid crystal display device converts an inputted gray level (FIG. 15(a)) of each pixel into an input level (FIG. 15(b)) associated with the gray level on the basis of the LUT, and outputs it.

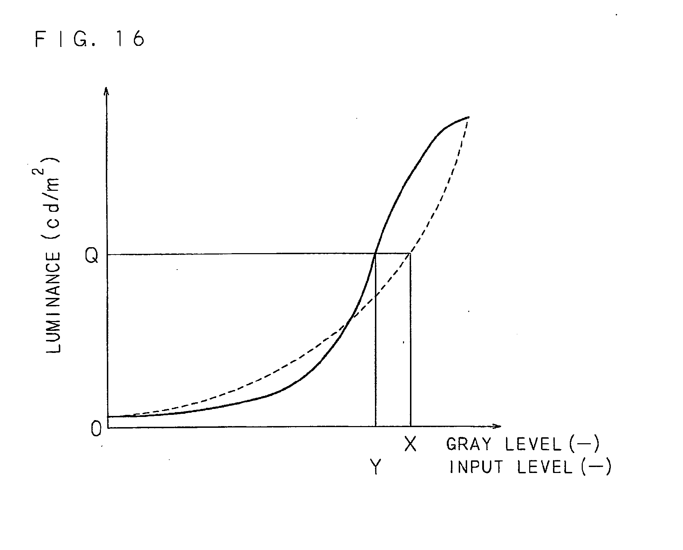

FIG. 16 is an explanatory view showing the concept of luminance control using the LUT. Referring to FIG. 16, the continuous line denotes an actual gray-level characteristic of the liquid crystal panel and the broken line denotes an ideal gray-level characteristic to be set. The liquid crystal display device converts a gray level X represented by the inputted video signal into an input level Y to the liquid crystal panel on the basis of the LUT to obtain a luminance Q, which gives an ideal gray-level characteristic, so as to realize an ideal gray-level characteristic artificially.

[Patent Document 1] Japanese Patent Application Laid-Open No.2002-99238

Document US2001008395 discloses, in figure 1, a liquid crystal display in which the desired luminance of the backlight is changed based on a luminance setting command of a user. The desired luminance set signal is converted to a duty-factor for the lamp, using duty-factor-to-brightness characteristic data stored beforehand as a table in memory. A calculation circuit calculates a new duty-factor based on the desired luminance and the actual luminance of the display measured by a sensor.

Document US6297791 discloses an apparatus and a method to calibrate the gamma conversion characteristic of a projector. Gradation luminances are measured with a firt sensor mounted to the projector screen, and a reference sensor simultaneously receives a full-white signal, which is used to normalize the gradation step signal from the first sensor. A data correction circuit uses the measured luminance data to calculate the new gamma conversion characteristic.

DISCLOSURE OF THE INVENTION

Ideal gray-level characteristics are divided into two groups: one changes relatively to the maximum luminance, and the other one does not change relatively to the maximum luminance. A specific example of the former is a gamma characteristic, and a specific example of the latter is the gray-scale display function (which will be hereinafter referred to as the GSDF) compatible with the DICOM (standard for a medical imaging device).

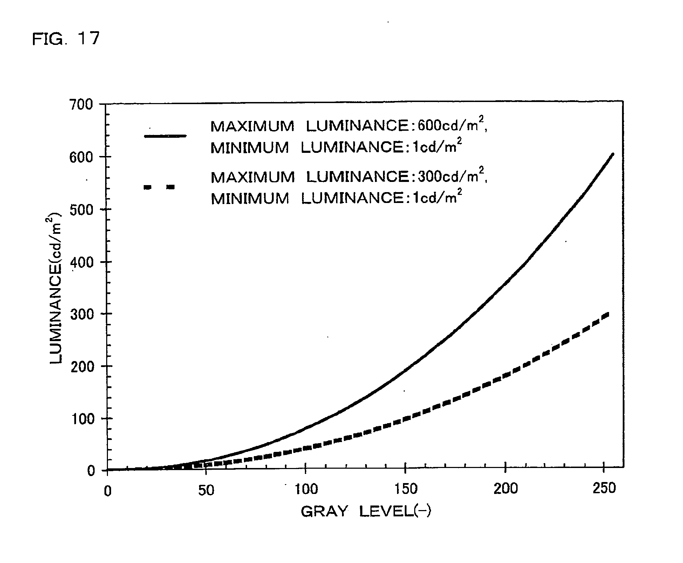

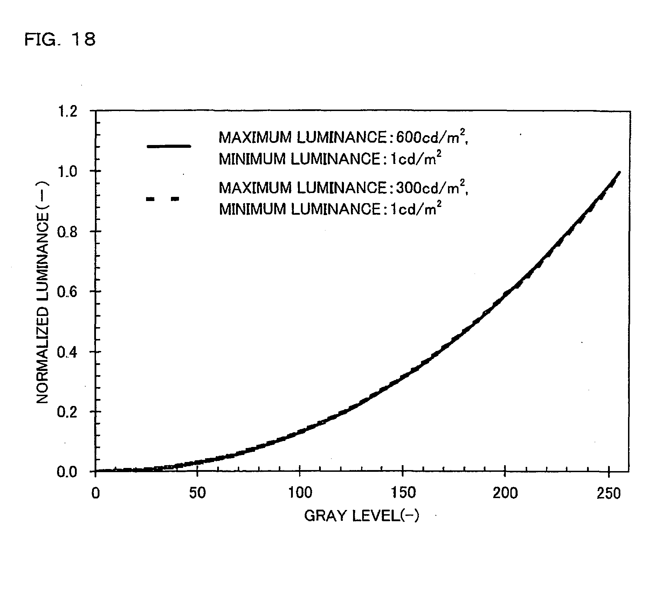

FIG. 17 is a graph showing the gamma characteristic ($\gamma$=2.2), wherein the abscissa axis denotes a gray level and the ordinate axis denotes a luminance. The continuous line denotes a characteristic obtained when the luminance at 255-gray level (maximum luminance) is 600cd/m$^2$ and the luminance at 0-gray level (minimum luminance) is 1cd/m$^2$, and the broken line denotes a characteristic obtained when the maximum luminance is 300cd/m$^2$ and the minimum luminance is 1cd/m$^2$. The gamma characteristic is represented by a per se known expression (2). Each characteristic, when normalized by the maximum luminance, has a common characteristic (curve) despite a difference in the maximum luminance as shown in FIG. 18. Accordingly, conversion into a desired gray-scale characteristic can be performed without changing the LUT since the gray level for obtaining the same gray level does not change even when the luminance changes. That is, there is no need to change the LUT when the ideal gray-scale characteristic changes relatively to the maximum luminance.

$$L = \left(L_{max} - L_{min}\right)\left(\frac{i}{255}\right)^{\gamma} + L_{min} \qquad \text{... expression (2)}$$

L: luminance
$\tau$: gray level (0, 1, ..., 255)
$\gamma$: gamma value
$L_{max}$: maximum luminance
$L_{min}$: minimum luminance

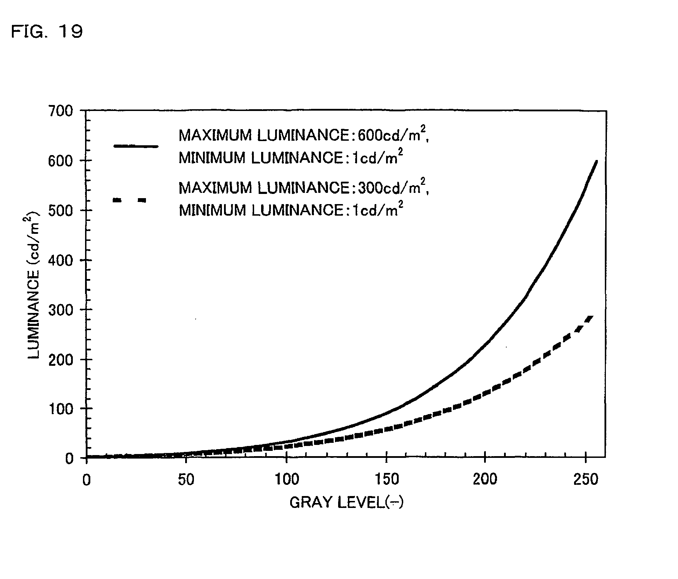

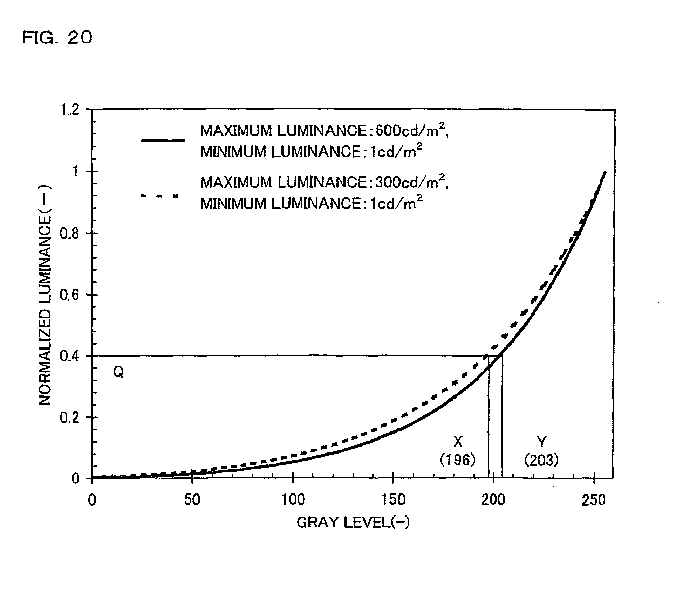

FIG. 19 is a graph showing the GSDF compatible with the DICOM, wherein the abscissa axis denotes the gray level and the ordinate axis denotes the luminance. The continuous line denotes a characteristic obtained when the maximum luminance is 600cd/m$^2$ and the minimum luminance is 1cd/m$^2$, and the broken line denotes a characteristic obtained when the maximum luminance is 300cd/m$^2$ and the minimum luminance is 1cd/m$^2$. As shown in FIG. 20, each GSDF, when normalized by the maximum luminance, has a different characteristic (curve) according to the maximum luminance, differently from the above gamma characteristic. Since the gray level for obtaining the same gray level changes as the luminance changes, deviation from a desired gray-level characteristic arises unless the LUT is changed. For example, a gray level which gives the same normalized luminance Q (0.4cd/m$^2$) is a gray level Y (203) when the maximum luminance is 600cd/m$^2$, and is a gray level X (196) when the maximum luminance is 300cd/m$^2$. The gray level thus differs (X≠Y). Accordingly, there arises a need to change the LUT when the ideal gray-level characteristic does not change relatively to the maximum luminance.

However, there is a problem that change of the LUT needs measurement of an actual panel gray-level characteristic with an external photosensor every time, since the information to be stored in the LUT is conventionally obtained by measurement with an external photosensor in the production process of the liquid crystal display device. Though it is conceivable to preliminarily measure a panel gray-level characteristic for each possible maximum luminance and store a plurality of LUTs corresponding to the respective maximum luminance to perform correction, there is a problem that a rise in the cost is inevitable in this manner since a required capacity of a storage unit increases and there arises a need to generate and store a plurality of LUTs.

The above problem is caused by the fact that the liquid crystal display device, which is not a selfluminous display device, needs a backlight as a light source and the luminance of the backlight generally changes as the backlight is used. Aspects of the change in the luminance of the backlight include a fact that time (aging time) is required until the luminance is stabilized and a fact that the luminance gradually decreases depending on cumulative operating time.

Though it is said that the luminance of a conventional liquid crystal display device can be controlled, controlled is only the brightness, i.e. the ratio of luminance, so that a user cannot evaluate the luminance value during control (e.g. brightness 50%) and has to rely on his own sensitivity That is, the brightness can be controlled only qualitatively, and there is no liquid crystal display device capable of controlling the luminance as desired, although it is desirable to control the luminance quantitatively according to conditions such as user preference, use environment and the type of a screen image to be displayed.

The present invention has been made with the aim of solving the above problems, and it is an object thereof to provide a luminance control method for a liquid crystal display device capable of controlling a luminance of a backlight and setting the luminance quantitatively by uniquely obtaining the relation between the luminance of the backlight and a luminance of light emitted from the backlight through a liquid crystal panel and by uniquely calculating the luminance of light emitted from the backlight through the liquid crystal panel on the basis of the luminance of the backlight.

Another object of the present invention is to provide a luminance control method for a liquid crystal display device capable of realizing a superior gray-level characteristic by obtaining an actual gray-level characteristic of a liquid crystal panel, by calculating a luminance to be set, i.e. a desired ideal gray-level characteristic, and by comparing both the gray-level characteristics to control the luminance.

Still further object of the present invention is to provide a liquid crystal display device to which the luminance control method is applied and a computer program for realizing the luminance control method with a computer.

A luminance control method is claimed by claim 1.

Further luminance control methods are claimed by claims 2 to 4.

A liquid crystal display device is claimed by claim 5.

a further liquid crystal display device is claimed by claim 6.

A computer program is claimed by claim 7. luminance set value, on the basis of information stored in the storage unit; and causing the computer to output the calculated control information to the liquid crystal display device.

The luminance detected by the luminance detecting means and the luminance of light emitted from the backlight through the liquid crystal panel are measured in each of a plurality of states where the liquid crystal panel has a predetermined transmittance and the backlight has a different luminance, and both the luminances in each state are stored associated with each other. Since the relation
between the luminance of the backlight and the luminance of light emitted from the backlight through the liquid crystal panel can be obtained uniquely, the luminance of light emitted from the backlight through the liquid crystal panel can be calculated based on the luminance of the backlight detected by the luminance detecting means. A desired luminance set value of light emitted through the liquid crystal panel is then set and the luminance of the backlight to be detected by the luminance detecting means in a case of the set luminance set value is calculated to control the luminance of the backlight. Accordingly, the luminance can be controlled so as to be a desired luminance set value, differently from conventional brightness control by which the luminance can be controlled only qualitatively Moreover, when the luminance detected by the luminance detecting means and the luminance of light emitted from the backlight through the liquid crystal panel in a plurality of states where the backlight has a different luminance are measured in the production process of the liquid crystal display device and both the luminances in each state are preliminary stored associated with each other, there is no need to measure the luminance of light emitted through the liquid crystal panel using an external photosensor after shipment, the burden imposed on the user of the liquid crystal display device is decreased, highly accurate measurement is enabled as a series of processes, and it becomes possible to control the luminance so as to be a desired luminance with a high degree of accuracy. Furthermore, since quantitative luminance setting is enabled, the invention can be utilized as a self-diagnosis function such as notification to the user of the present luminance or notification to the user of a fact that the luminance falls below a predetermined luminance, when it occurs.

The luminance of light emitted through the liquid crystal panel in each input level is measured and the measured luminance is stored associated with an input level which gives the luminance. In this manner, an actual gray-level characteristic of the liquid crystal panel can be obtained. The luminance of light emitted through the liquid crystal panel in each input level in a case where the luminance of light emitted through the liquid crystal panel is a luminance set value and the luminance (ideal luminance) to be set in each gray level is then calculated and an input level which gives a luminance substantially equal to the ideal luminance in each gray level is extracted. Since the input level can be set so as to give a luminance substantially equal to the ideal luminance in each gray level, it becomes possible to realize a superior gray-level characteristic.

The luminance of light emitted through the liquid crystal panel in each input level is measured, each luminance of each measured input level is divided and normalized by the maximum luminance of the measured luminances, and each normalized luminance is stored associated with an input level which gives the luminance. In this manner, it is possible to obtain an actual gray-level characteristic of the liquid crystal panel. The luminance of light emitted through the liquid crystal panel in each input level in a case where the luminance of light emitted through the liquid crystal panel is the luminance set value and a luminance (ideal luminance) to be set in each gray level is then calculated and an input level which gives a luminance substantially equal to the ideal luminance in each gray level is extracted. Since the input level can be set so as to give a luminance substantially equal to the ideal luminance in each gray level, it is possible to realize a superior gray-level characteristic.

Moreover, regarding the above measurement of the luminance of light emitted through the liquid crystal panel, when the luminance in a predetermined wavelength band and the luminance in a plurality of wavelength bands in the predetermined wavelength band are measured, the input level for each wavelength band can be set individually so as to give a luminance substantially equal to the ideal luminance in each gray level. Since luminance control can be performed individually even when each wavelength band has a different gray-level characteristic, a superior gray-level characteristic can be realized. For example, by measuring the luminance of a wavelength band corresponding to visible light as the predetermined wavelength band and measuring the luminances of wavelength bands corresponding to the three primary colors as a plurality of wavelength bands, input level can be set individually for the three primary colors so as to give a luminance substantially equal to the ideal luminance in each gray level. Though the wavelength distribution of light emitted from the backlight might change generally due to aged deterioration, a gray-level characteristic having superior color reproducibility and superior white balance can be realized since luminance control can be performed individually for the three primary colors.

By making a luminance in a state where the transmittance of the liquid crystal panel is a controllable maximum transmittance a luminance set value, the maximum luminance of light emitted through the liquid crystal panel can be set quantitatively.

By increasing the luminance difference between a plurality of states of different luminance of the backlight, the relation between the luminance of the backlight and the luminance of light emitted from the backlight through the liquid crystal panel can be obtained with a high degree of accuracy.

Conversion of the luminance of the backlight into an analog-type electric signal having a voltage corresponding to the luminance of the backlight is performed by the photoelectric conversion means and the converted analog-type electric signal is converted into a digital-type electric signal by the analog-digital conversion means. Accordingly, the luminance detecting means can be constructed at low cost using general-purpose photoelectric conversion means and analog-digital conversion means.

With the present invention, since the relation between the luminance of the backlight and the luminance of light emitted from the backlight through the liquid crystal panel can be obtained uniquely and the luminance of light emitted from the backlight through the liquid crystal panel can be uniquely calculated based on the luminance of the backlight, the luminance of the backlight can be controlled and the luminance can be set quantitatively.

Moreover, with the present invention, since an actual gray-level characteristic of the liquid crystal panel can be obtained, a gray-level characteristic to be set can be calculated and both the gray-level characteristics are compared to control the luminance, and a superior gray-level characteristic can be realized.

Furthermore, with the present invention, when the luminance of the backlight (luminance detected by the luminance detecting means) and the luminance of light emitted from the backlight through the liquid crystal panel are measured in the production process of the liquid crystal display device, since there is no need to measure the luminance of light emitted through the liquid crystal panel using an external photosensor after shipment, the burden imposed on the user of the liquid crystal display device is decreased, highly accurate measurement is enabled as a series of processes, and it becomes possible to control the luminance so as to be a desired luminance with a high degree of accuracy. Moreover, even when the gray-level characteristic does not change relatively to a change in the maximum luminance, a desired gray-level characteristic can be realized with a high degree of accuracy without using an external photosensor.

BRIEF DESCRIPTION OF THE DRAWINGS

FIG. 1 is a block diagram showing a structure example of a liquid crystal display device according to Embodiment 1 of the present invention;

FIG. 2 is a diagram showing an input-output characteristic of a source driver;

FIG. 3 is a flow chart showing an example of a first process procedure of a luminance control method for a liquid crystal display device according to Embodiment 1 of the present invention;

FIG. 4 is a graph showing a luminance-output value characteristic;

FIG. 5 is a graph showing an actual gray-level characteristic of the liquid crystal panel;

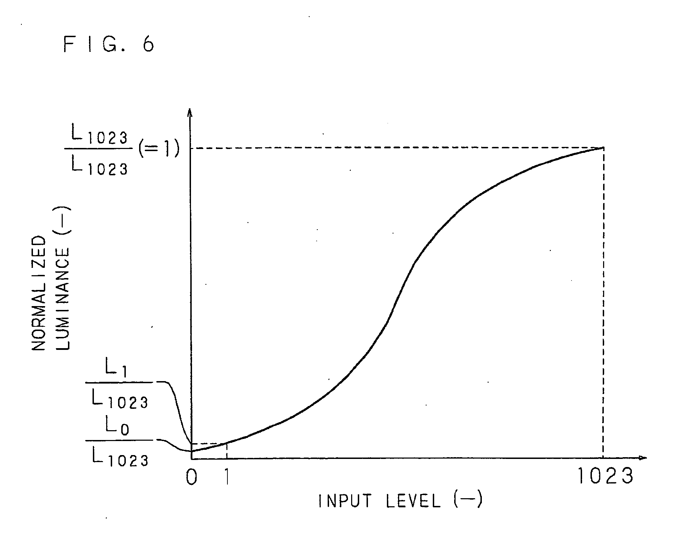

FIG. 6 is a graph showing a normalized gray-scale characteristic of the liquid crystal panel;

FIG. 7 is a flow chart showing an example of a second process procedure of a luminance control method for a liquid crystal display device according to Embodiment 1 of the present invention;

FIG. 8 is a table view composed of a luminance level and the maximum luminance $L_{TMAX}$;

FIG. 9 is a flow chart showing an example of an LUT generating/storing process;

FIG. 10 is a block diagram showing a structure example of a liquid crystal display device according to Embodiment 2 of the present invention;

FIG. 11 is a flow chart showing an example of a first process procedure of a luminance control method for a liquid crystal display device according to Embodiment 2 of the present invention; and

FIG. 12 is a flow chart showing an example of a second process procedure of a luminance control method for a liquid crystal display device according to Embodiment 2 of the present invention.

FIG. 13 is a graph showing an example of the electrooptical characteristic of a liquid crystal material;

FIG. 14 is a concept view showing an example of the content of an LUT;

FIG. 15 is an explanatory view showing each pixel level before and after luminance control using the LUT;

FIG. 16 is an explanatory view showing the concept of luminance control using the LUT;

FIG. 17 is a graph showing a gamma characteristic;

FIG. 18 is a graph of a normalized gamma characteristic;

FIG. 19 is a graph showing the GSDF compatible with the DICOM;

FIG. 20 is a graph of a normalized GSDF;

EXPLANATION OF REFERENCE NUMERALS

| 1, 31 | Liquid crystal display device |
| 2 | Control unit |
| 3 | ROM |
| 4 | RAM |
| 5 | Operation unit |
| 6, 36 | Storage unit |
| 6a, 36a, 36b, 36c | LUT |
| 7 | Signal input unit |
| 8 | Liquid crystal drive circuit |
| 9 | Liquid crystal panel |
| 10 | Backlight power supply circuit |
| 11 | Backlight |
| 12 | Photosensor |
| 13 | ADC |
| 22, 42 | External photosensor |

DETAILED DESCRIPTION OF THE INVENTION

The following description will explain the present invention in detail with reference to the drawings illustrating some embodiments thereof.

(Embodiment 1)

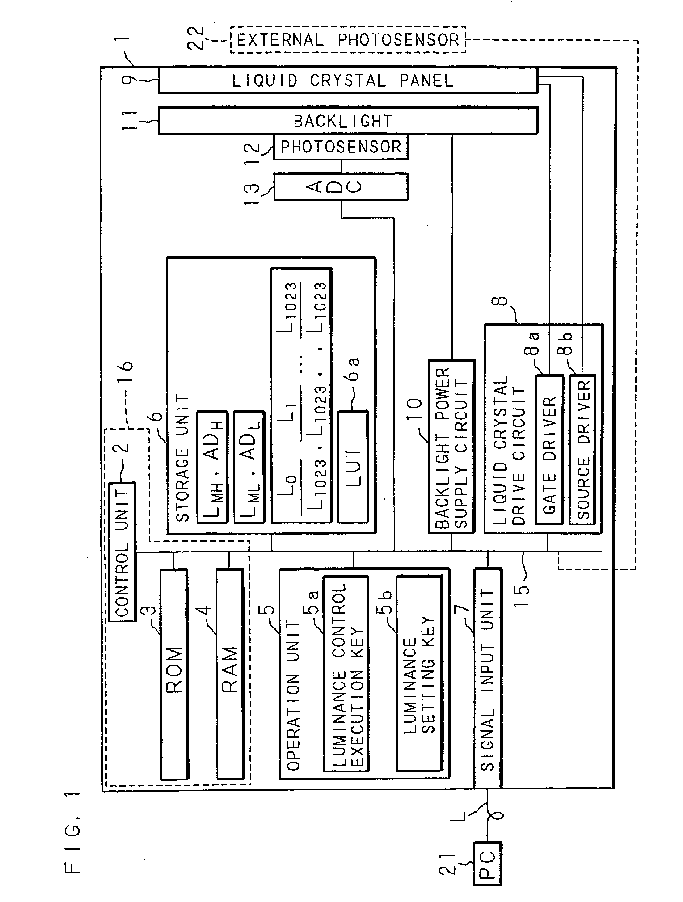

FIG. 1 is a block diagram showing a structure example of a liquid crystal display device according to Embodiment 1 of the present invention. The liquid crystal display device 1 according to this embodiment comprises a control unit 2, a ROM 3, a RAM 4, an operation unit 5, a storage unit 6, a signal input unit 7, a liquid crystal drive circuit 8, a liquid crystal panel 9, a backlight power supply circuit 10, a backlight 11, a photosensor 12, and an ADC (A/D converter) 13. The liquid crystal display device 1 has a function of displaying a screen image on a display screen of the liquid crystal panel 9 on the basis of a video signal inputted through the signal input unit 7. Though the video signal might be of an analog type, the following description will explain a digital-type video signal. It should be noted that an external photosensor 22 is a device for measuring the luminance of light emitted through the liquid crystal panel 9, and is additionally used when the following first process procedure is performed.

The control unit 2, which is specifically composed of a CPU connected with each hardware unit mentioned above through a bus 15, controls each hardware unit and performs a variety of software functions according to a control program stored in the ROM 3. The ROM 3 preliminarily stores a variety of software programs necessary for operations of the liquid crystal device as mentioned above. The RAM 4, which is composed of a SRAM, stores temporal data which is generated when the software is executed. It should be noted that the control unit 2, the ROM 3, the RAM 4 and the like may be realized by an electronic circuit 16 such as a microcomputer so as to a execute a variety of processes as hardware.

The operation unit 5 comprises various function keys for operating the liquid crystal display device 1. The function keys include a luminance control execution key 5a for setting whether a luminance control process is to be performed or not and a luminance setting key 5b for setting the luminance of the liquid crystal display device. It should be noted that an On Screen Display (OSD) may be displayed on the liquid crystal panel 9 so as to operate various settings of the liquid crystal display device, or the liquid crystal panel 9 may be of a touch panel type so that a part of, or all of, various function keys of the operation unit 5 can be substituted.

The storage unit 6, which is a device rewritable as software, stores: an output value $AD_H$ of the ADC 13 and a luminance $L_{MH}$ of a substantially center part of the display surface of the liquid crystal panel 9 obtained when the brightness is the maximum (100%); an output value $AD_L$ of the ADC 13 and a luminance $L_{ML}$ of a substantially center part of the display surface of the liquid crystal panel obtained when the brightness is the minimum (0%); and luminance $L_0/L_{1023}, L_1/L_{1023}, ..., L_{1023}/L_{1023}$ which is obtained by normalizing the luminance $L_0, L_1, ..., L_{1023}$ of a substantially center part of the display surface obtained when a source driver (mentioned later) outputs an output voltage for each input level (e.g. 10 bit: 0~1023) to the liquid crystal panel. The storage unit 6 further has a function of timely updating and storing an LUT 6a in which a gray level is associated with an input level to the liquid crystal panel corresponding to the gray level. The content of the LUT 6a is the same as the conventional LUT illustrated in FIG. 14.

The signal input unit 7, which is connected to an external PC 21 through a video signal line L, receives a video signal outputted from the PC 21, and the control unit 2 corrects the received video signal on the basis of the LUT 6a stored in the storage unit 6 and outputs it to the liquid crystal drive circuit 8. The liquid crystal drive circuit 8, which is composed chiefly of a gate driver 8a and a source driver 8b, drives the liquid crystal panel 9 on the basis of a video signal (corrected signal) inputted from the control unit 2. In this manner, the control unit 2 can control the transmittance of the liquid crystal panel 9 in a gray level associated with an input level of the video signal outputted from the PC 21.

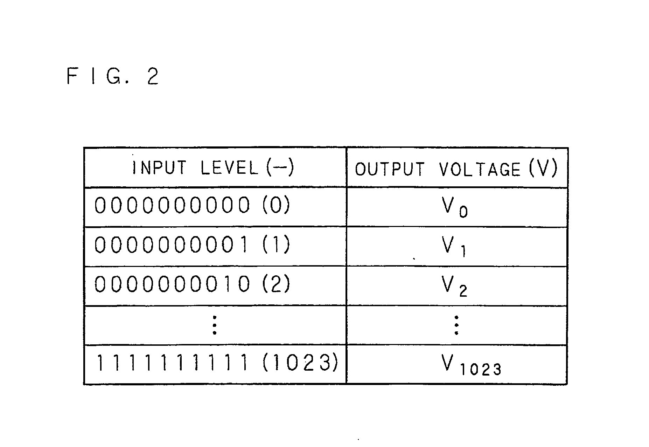

Supplied to the source driver 8b, which has an input-output characteristic shown in FIG. 2, is a reference voltage (when 10 bit: VREF1, VREF2, ..., VREF10), and the source driver 8b has a function of generating an output voltage according to an input level inputted from the control unit 2 and outputting it in each output stage. That is, the source driver 8b outputs the output voltage (data voltage) $V_0, V_1, ..., V_{1023}$ to a source line of the liquid crystal panel according to the inputted input level 0, 1, ..., 1023 in each output stage so as to supply data voltage.

The liquid crystal panel 9 is constructed by disposing a pair of glass substrates opposite to each other and forming a liquid crystal layer made of liquid crystal materials in a gap between them. A plurality of pixel electrodes and a TFT whose drain is connected to the respective pixel electrodes are formed on one glass substrate and a common electrode is formed on the other glass substrate. The gate and the source of the TFT are connected sequentially with each output stage of the gate driver 8a and the source driver 8b, respectively. The liquid crystal panel 9 is fitted between a pair of polarizing plates, and the backlight 11 is disposed at the back thereof.

The backlight power supply circuit 10 has a function of controlling an output voltage thereof and functions as luminance control means for controlling the luminance of light emitted from the backlight 11 by outputting a controlled voltage to the backlight 11. The liquid crystal panel 9 controls the light transmittance determined by an electrooptical characteristic of a liquid crystal material and displays a screen image by controlling On/Off of each pixel by a gate signal inputted from the gate driver 8a and by applying an output voltage (data voltage) inputted from the source driver 8b to each pixel during the On period.

Disposed near the backlight 11 is a general purpose photosensor 12, such as a photodiode or a phototransistor, which converts incident light from the backlight 11 into an analog-type electric signal (which will be hereinafter referred to as an analog signal) having a voltage according to the luminance (e.g. the luminance in the wavelength band of the visible light) of the incident light. The ADC 13 converts the analog signal outputted from the photosensor 12 into a digital-type electric signal (which will be hereinafter referred to as a digital signal). That is, the photosensor 12 and the ADC 13 cooperate to function as luminance detecting means according to the present invention.

Now, the following description will explain a luminance control method for a liquid crystal display device according to the present invention, using a flow chart. The luminance control method for a liquid crystal display device according to the present invention includes a first process procedure, which uses an external photosensor 22, and a second process procedure, which does not use the external photosensor 22. It should be noted that the first process procedure is generally processed by a manufacturer of the liquid crystal device, i.e. processed in manufacturing process, and the second process procedure is processed by the user of the liquid crystal display device.

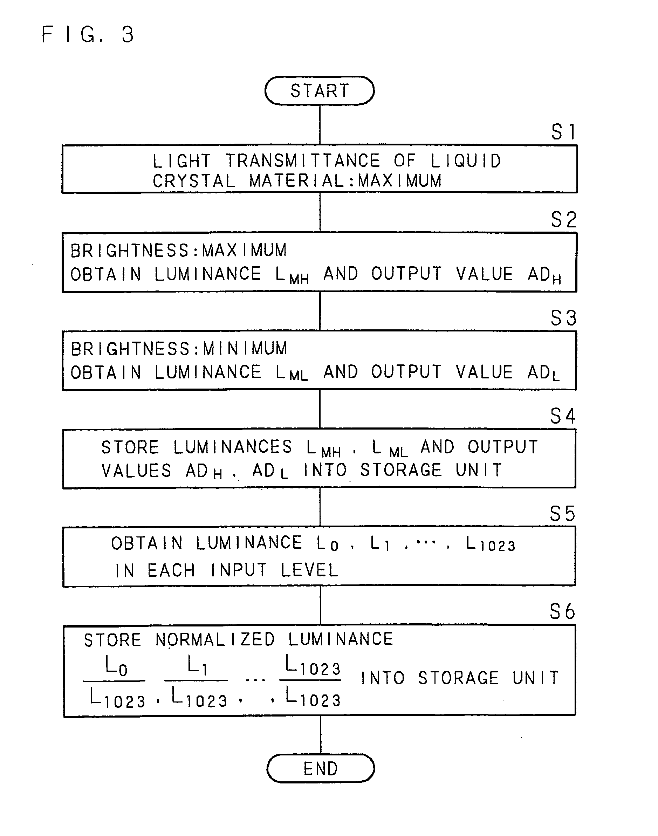

FIG. 3 is a flow chart showing an example of the first process procedure of the luminance control method for a liquid crystal display device according to Embodiment 1 of the present invention.

First, the control unit 2 controls the liquid crystal drive circuit 8 to give the maximum light transmittance of the liquid crystal material (step S1). In particular, when the liquid crystal panel 9 is in a normally black mode, the control unit 2 outputs a scanning signal to the gate driver 8a and outputs to the source driver 8b an input level (e.g. "1111111111(1023)" in a case of 10-bit input) which gives the maximum voltage to be applied to the liquid crystal material. The gate driver 8a outputs a scanning voltage for controlling On/Off of the TFT sequentially to each output stage in synchronization with the scanning signal inputted from the control unit 2 so as to supply the scanning voltage to the gate line of the liquid crystal panel. The source driver 8b outputs an output voltage (data voltage) $V_{1023}$ corresponding to the inputted input level (1023) to each output stage and to the source line of the liquid crystal panel. In this manner, each TFT applies the data voltage $V_{1023}$ to a pixel electrode and controls the light transmittance of the liquid crystal material determined by the electrooptical characteristic. It should be noted that, when the liquid crystal panel 9 is in a normally white mode, the light transmittance of the liquid crystal material can be maximum by outputting to the source driver 8b an input level (e.g. "0000000000(0)" in a case of 10-bit input) which gives the minimum voltage to be applied to the liquid crystal material. A signal of an input level which gives the maximum light transmittance of the liquid crystal material may be inputted externally from a PC or the like.

The control unit 2 then controls the backlight power supply circuit 10 to give the maximum brightness value (100%), obtains a luminance $L_{MH}$ of a substantially center part of the display surface of the liquid crystal panel 9 with the external photosensor 22 and obtains an output value $AD_H$ of the ADC 13 (step S2). Similarly, the control unit 2 controls the backlight power supply circuit 10 to give the minimum brightness value (0%), obtains a luminance $L_{ML}$ of a substantially center part of the display surface of the liquid crystal panel 9 and obtains an output value $AD_L$ of the ADC 13 (step S3). It should be noted that the brightness control can be performed by controlling the voltage value to be supplied to the backlight.

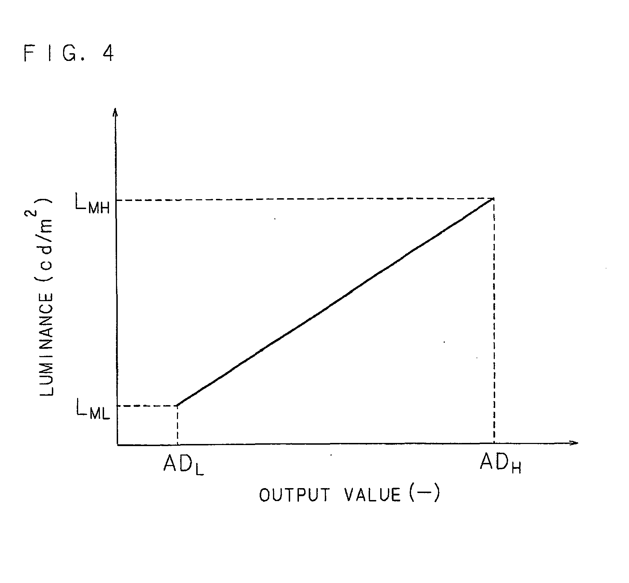

The control unit 2 stores in the storage unit 6 the luminances $L_{MH}$, $L_{ML}$ and the output values $AD_H$, $AD_L$ obtained in the steps S2 and S3 (step S4). Since the luminance L is proportional to the output value AD, a luminance-output value characteristic as shown in FIG. 4 can be obtained uniquely by obtaining two points of brightness, namely 100% and 0%, and the luminance L can be calculated (interpolated) based on an expression (3) from the output value AD of the ADC 13, the luminances $L_{MH}$, $L_{ML}$ and the output values $AD_H$, $AD_L$, without using the external photosensor 22. That is, the output value AD of the ADC 13, which gives the luminance L, can be calculated based on an expression (4). It should be noted that, though two points of 100% and 0% of the brightness are obtained in this example to determine the luminance-output value characteristic, the present invention is not limited to this, and the luminances and the output values of two arbitrary points of the different brightness may be obtained and the obtained luminances and output values may be stored in the storage unit 6 to obtain the luminance-output value characteristic by forward extrapolation or backward extrapolation, or the luminances and the output values of more than two arbitrary points of the different brightness may be obtained and linearization may be applied to obtain the luminance-output value characteristic.

$$L = L_{MH} + \frac{L_{MH} - L_{ML}}{AD_H - AD_L}\left(AD - AD_H\right) \quad \text{... expression (3)}$$

$$AD = AD_H + \frac{AD_H - AD_L}{L_{MH} - L_{ML}}\left(L - L_{MH}\right) \quad \text{... expression (4)}$$

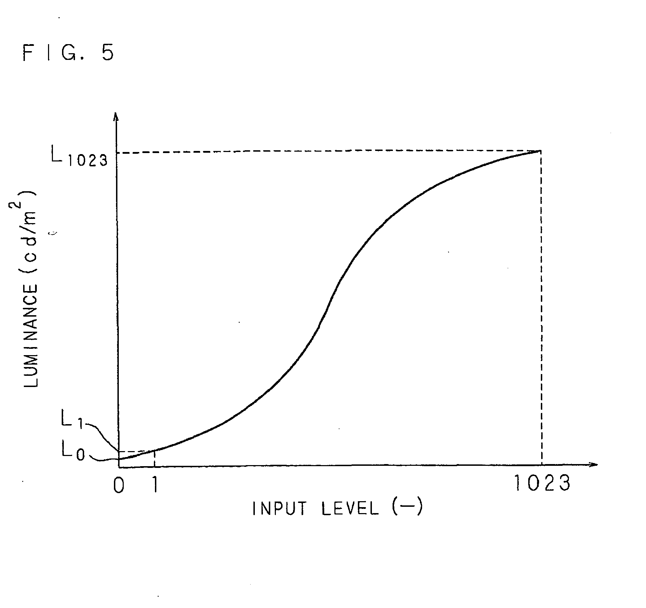

The control unit 2 then outputs to the source driver 8b a signal, which gives the input level of 0, 1, ..., 1023, to output the output voltage $V_0$, $V_1$, ..., $V_{1023}$ to the liquid crystal panel 9 and change the light transmittance of the liquid crystal material, and obtains the luminance $L_0$, $L_1$, ..., $L_{1023}$ of a substantially center part of the liquid crystal panel 9 in each case with the external photosensor 22 (step S5). In this manner, an actual gray-level characteristic of the liquid crystal panel 9 as shown in FIG. 5 can be obtained. A signal which gives the input level of 0, 1, ..., 1023 may be inputted externally from a PC or the like.

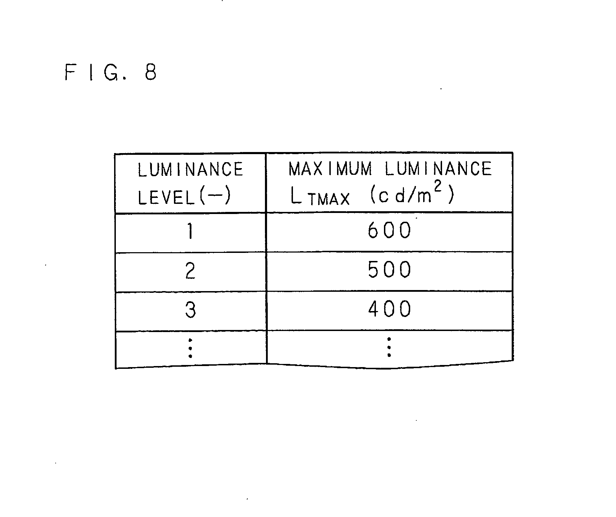

The obtained luminance $L_0$, $L_1$, ..., $L_{1023}$ is then normalized by dividing it by the maximum luminance $L_{1023}$ and the normalized luminance $L_0/L_{1023}$, $L_1/L_{1023}$, ..., $L_{1023}/L_{1023}$ is stored in the storage unit 6 (step S6). In this manner, a normalized gray-level characteristic of the liquid crystal panel 9 as shown in FIG. 8 can be obtained. It is needless to say that an actual gray-level characteristic obtained in the step S5 may be stored in the storage unit 6 instead of the normalized gray-level characteristic, and there is no limitation as long as a correlation between luminances for respective input levels inputted to the source driver is defined. Furthermore, 256 points of the luminance to give input levels of 0, 4, 8, ..., 1023, for example, of the input levels of 0, 1, ..., 1023 may be measured, and the luminance of 1024 points may be calculated by linear interpolation, normalized and then stored in the storage unit 6. In this manner, reduction of process time can be realized. It is needless to say that the 256 points of input levels to be measured actually may be arbitrary, and the number of the levels to be measured actually is not limited to 256.

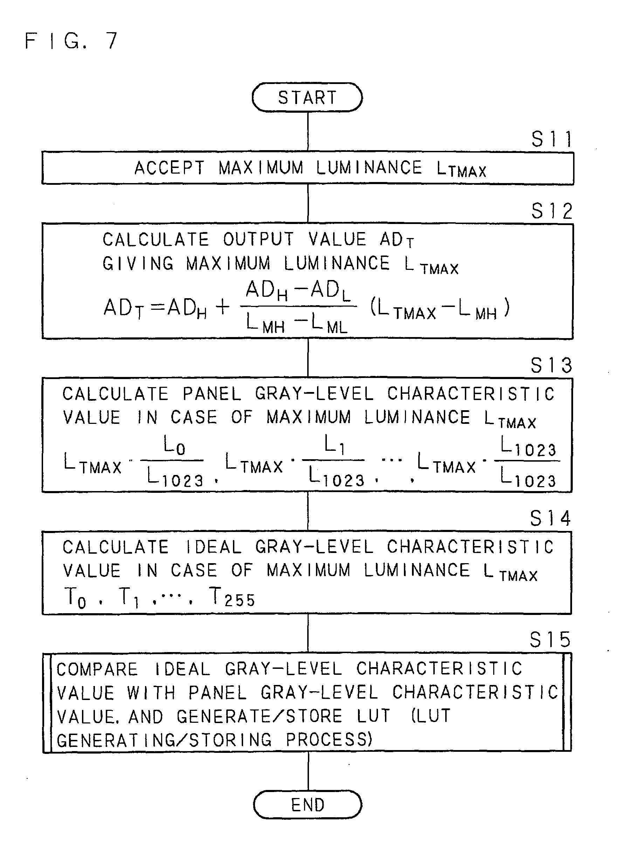

FIG. 7 is a flow chart showing an example of the second process procedure of the luminance control method for a liquid crystal display device according to Embodiment 1 of the present invention.

First, an input of a desired luminance set value (which will be hereinafter referred to as the maximum luminance $L_{TMAX}$) by a user of the liquid crystal display device 1 is accepted through the operation unit 5 (step S11). It should be noted that the maximum luminance $L_{TMAX}$ may be inputted directly as a value itself, or accepted in a manner that a table in which a luminance level is associated with the maximum luminance $L_{TMAX}$ as shown in FIG. 8 is stored in the storage unit 6 and the user selects a luminance level after reading the table in a suitable manner.

The control unit 2 reads the luminances $L_{MH}$, $L_{ML}$ and the output values $AD_H$, $AD_L$ stored in the storage unit 6 and calculates an output value $AD_T$ which gives the maximum luminance $L_{TMAX}$ based on the expression (4) from the read luminances $L_{MH}$, $L_{ML}$ and output values $AD_H$, $AD_L$ and the maximum luminance $L_{TMAX}$ accepted in the step S11 (step S12). In this manner, the luminance of the display screen of the liquid crystal panel can be controlled so as to be the maximum luminance $L_{TMAX}$ by controlling the backlight power supply circuit 10 so as to give the output value $AD_T$.

The control unit 2 then reads the normalized luminance $L_0/L_{1023}$, $L_1/L_{1023}$, ..., $L_{1023}/L_{1023}$ stored in the storage unit 6 and multiplies the read luminance $L_0/L_{1023}$, $L_1/L_{1023}$, ..., $L_{1023}/L_{1023}$ by the maximum luminance $L_{TMAX}$ accepted in the step S11 to calculate the actual luminance (which will be hereinafter referred to as a panel gray-level characteristic value) $L_{TMAX} \cdot L_0/L_{1023}$, $L_{TMAX} \cdot L_1/L_{1023}$, ..., $L_{TMAX} \cdot L_{1023}/L_{1023}$ in a case of the maximum luminance $L_{TMAX}$ (step S13).

The control unit 2 then calculates luminance (which will be hereinafter referred to as an ideal gray-level characteristic value) $T_0$, $T_1$, ..., $T_{255}$ to be set in a case of the maximum luminance $L_{TMAX}$ based on a display function preliminarily stored in the storage unit 6 (step S14). Now, the following description will explain an example where the display function is the GSDF. The GSDF defines that the minimum luminance difference of a given target identifiable by a normal man is 1 JND (Just-Noticeable Difference) under a given observation conditions, and is a function obtained by plotting JNDs up to 1023-step assuming that the minimum luminance is 0.05cd/m2.

The control unit 2 calculates $JND_{TMAX}$ and $JND_{TMIN}$ respectively for the maximum luminance $L_{TMAX}$ and minimum luminance $L_{TMIN}$ accepted in the step S11 based on an expression (5). It should be noted that the minimum luminance $L_{TMIN}$ is $L_{TMAX} \cdot L_0/L_{1023}$ so that the luminance difference between each JND (each gray level) becomes the maximum, i.e. the maximum dynamic range. It is needless to say that the minimum luminance $L_{TMIN}$ may be an arbitrary luminance of the $L_{TMAX} \cdot L_1/L_{1023}$, $L_{TMAX} \cdot L_2/L_{1023}$, ..., $L_{TMAX} \cdot L_{1023}/1023$, or may be obtained in a manner that input of a desired minimum luminance $L_{TMIN}$ by the user of the liquid crystal display device 1 is accepted through the operation unit 5.

$$JND = A + B \cdot \log_{10}(L) + C \cdot (\log_{10}(L))^2 + D \cdot (\log_{10}(L))^3$$

$$+ E \cdot (\log_{10}(L))^4 + F \cdot (\log_{10}(L))^5 + G \cdot (\log_{10}(L))^6$$

$$+ H \cdot (\log_{10}(L))^7 + I \cdot (\log_{10}(L))^8 \qquad \dots \text{expression}(5)$$

A=71.498068, B=94.593053, C=41.912053
D=9.8247004, E=0.28175407, F=-1.1878455
G=-0.18014349, H=0.14710899, I=-0.017046845

In order to allocate a resolution n (e.g. 8 bit=256) a JND difference ($JND_{TMAX}$-$JND_{TMIN}$) between the maximum luminance $L_{TMAX}$ and the minimum luminance $L_{TMIN}$, which is divided equally into the number of the gray levels $2^n$-1 (255 in this example), the control unit 2 calculates an ideal gray-level characteristic value $T_1$, $T_2$, ..., $T_{255}$ in each gray level based on an expression (6). It should be noted that, though the above description explained an example where the display function is the GSDF, it is needless to say that the display function may be any function.

$$T_i = 10^{L\left\{\left(\frac{JND_{TMAX} - JND_{TMIN}}{255}\right)i + JND_{TMIN}\right\}} \quad \text{... expression (6)}$$

i: gray level (0, 1, ..., 255)

$$L(k) = \frac{a + c \cdot Ln(k) + e \cdot (Ln(k))^2 + g \cdot (Ln(k))^3 + q \cdot (Ln(k))^4}{1 + b \cdot Ln(k) + d \cdot (Ln(k))^2 + f \cdot (Ln(k))^3 + h \cdot (Ln(k))^4 + p \cdot (Ln(k))^5}$$

a=-1.3011877, b=-2.5840191E-2, c=8.0242636E-2
d=-1.0320229E-1, e=1.3646699E-1, f=2.8745620E-2
g=-2.5468404E-2, h=-3.1978977E-3
p=1.2992634E-4, q=1.3635334E-3

The control unit 2 then compares the ideal gray-level characteristic value $T_0$, $T_1$, ..., $T_{255}$ calculated in the step S14 with the panel gray-level characteristic value $L_{TMAX} \cdot L_0/L_{1023}$, $L_{TMAX} \cdot L_1/L_{1023}$, ..., $L_{TMAX} \cdot L_{1023}/L_{1023}$ calculated in the step S13 to generate the LUT 6a and stores the LUT 6a in the storage unit 6 (step S15).

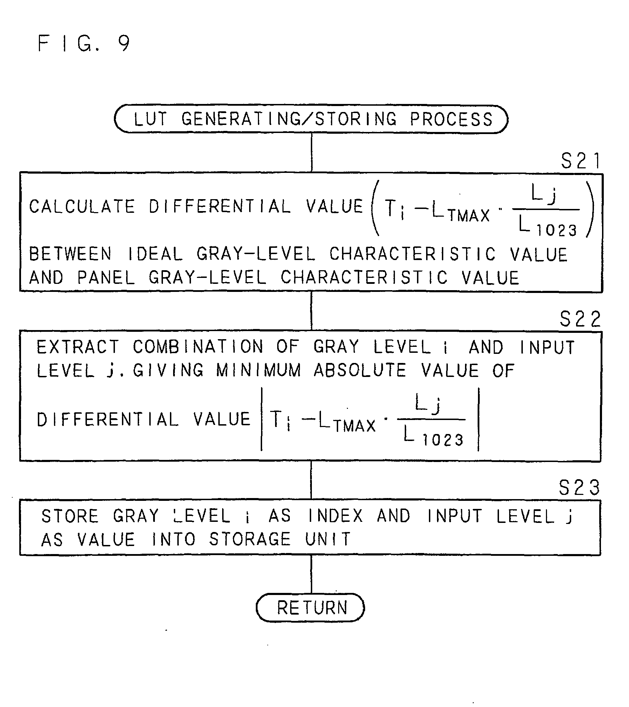

Now, the following description will explain the LUT generating/storing process mentioned above in the step S15 more concretely. FIG. 9 is a flow chart showing an example of the LUT generating/storing process.

The control unit 2 calculates a differential value ($T_i$-$L_{TMAX} \cdot L_j/L_{1023}$) between an ideal gray-level characteristic value $T_i$ (i=0, 1, ..., 255) and a panel gray-level characteristic value $L_{TMAX} \cdot L_j/L_{1023}$ (j=0, 1, ..., 1023) (step S21), and extracts a combination of a gray level i and an input level j, which gives the minimum absolute value of the calculated differential value $|T_i$-$L_{TMAX} \cdot L_j/L_{1023}|$, for each gray level i (step S22).

The calculated gray level i is then stored in the storage unit 6 as an index of the LUT 6a and the input level j is stored in the storage unit 6 as a value of the LUT 6a (step S23). It should be noted that, though described is a manner in that the LUT 6a is composed of a combination of a gray level i and an input level j which gives the minimum absolute value of the differential value ($T_i$-$L_{TMAX} \cdot L_j/L_{1023}$) in the step S22, the present invention is not limited to this, and the LUT 6a may be composed of a combination of a gray level i and an input level j which gives the smallest positive number (or negative number) of the differential value ($T_i$-$L_{TMAX} \cdot L_j/L_{1023}$).

(Embodiment 2)

Though described in Embodiment 1 is an embodiment suitable mainly for a monochrome liquid crystal display device which uses one LUT for luminance control, it is preferable to prepare an LUT for luminance control for each color in a case of a color liquid crystal display device since the transmittance of light in the liquid crystal material differs according to the wavelength of the light as shown in the expression (1). Such construction is described in Embodiment 2.

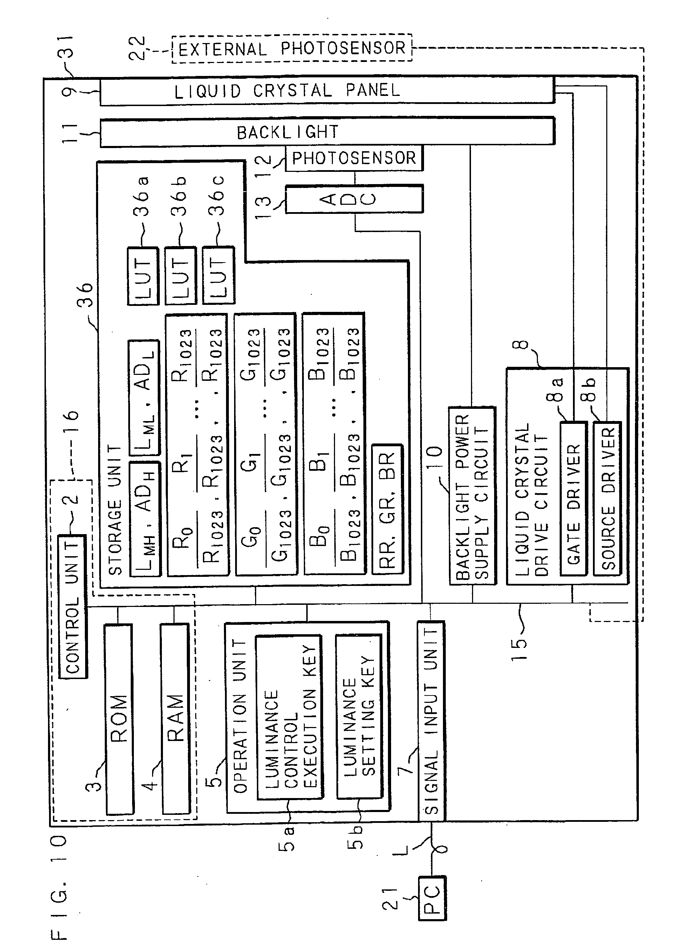

FIG. 10 is a block diagram showing a structure example of a liquid crystal display device according to Embodiment 2 of the present invention. A liquid crystal display device 31 according to this embodiment comprises a control unit 2, a ROM 3, a RAM 4, an operation unit 5, a storage unit 36, a signal input unit 7, a liquid crystal drive circuit 8, a liquid crystal panel 9, a backlight power supply circuit 10, a backlight 11, a photosensor 12, and an ADC 13.

The storage unit 36, which is a device rewritable as software, stores: an output value $AD_H$ of the ADC 13 and a luminance $L_{MH}$) of a substantially center part of the display surface of the liquid crystal panel 9 in a case of the maximum brightness (100%); an output value $AD_L$ of the ADC 13 and a luminance $L_{ML}$ of a substantially center part of the display surface of the liquid crystal panel 9 in a case of the minimum brightness (0%); and a first color luminance $R_0/R_{1023}$, $R_1/R_{1023}$, ..., $R_{1023}/R_{1023}$, a second color luminance $G_0/G_{1023}$, $G_1/G_{1023}$, ..., $G_{1023}/G_{1023}$, and a third color luminance $B_0/B_{1023}$, $B_1/B_{1023}$, ..., $B_{1023}/B_{1023}$ which are obtained by normalizing a first color luminance $R_0$, $R_1$, ..., $R_{1023}$, a second color luminance $G_0$, $G_1$, ..., $G_{1023}$, and a third color luminance $B_0$, $B_1$, ..., $B_{1023}$ corresponding to the three primary colors of a substantially center part of the display surface obtained when the source driver 8b outputs an output voltage corresponding to each input level to the liquid crystal panel 9. The storage unit 36 further has a function of timely updating and storing an LUT 36a, 36b, 36c for each color in which a gray level is associated with an input level to the liquid crystal panel 9 according to the gray level. The content of the LUTs 36a, 36b and 36c are respectively the same as the conventional LUT illustrated in FIG. 14. Since other structures are the same as those of Embodiment 1, like codes are used to refer to like parts and the explanation thereof is omitted.

It should be noted that an external photosensor 42 is a device for measuring the luminance in a wavelength band corresponding to visible light of light emitted through the liquid crystal panel 9 and the luminance in wavelength bands corresponding respectively to the three primary colors, and is additionally used when a first process procedure (mentioned later) is performed. It should be also noted that the primary three colors include a color mixing system composed of red, green and blue, and a subtractive color system composed of yellow, cyan and magenta, and any one of the color systems may be employed.

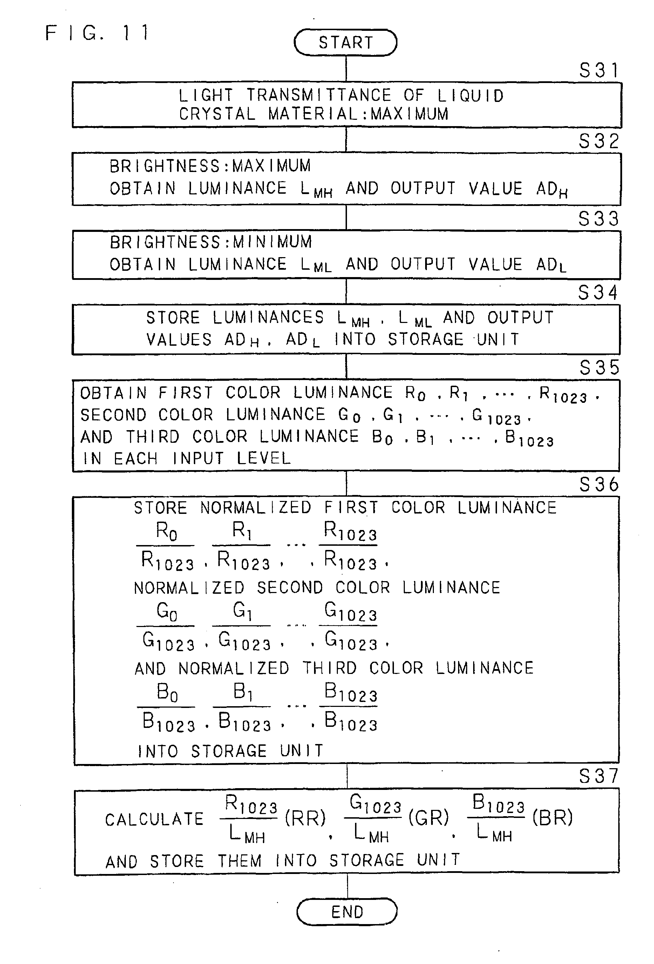

FIG. 11 is a flow chart showing an example of the first process procedure of a luminance control method for a liquid crystal display device according to Embodiment 2 of the present invention.

First, the control unit 2 controls the liquid crystal drive circuit 8 to give the maximum light transmittance of the liquid crystal material (input level: 1023) (step S31). The control unit 2 then controls the backlight power supply circuit 10 to give the maximum brightness value (100%), obtains a luminance $L_{MH}$ of a substantially center part of the display surface of the liquid crystal panel 9 with the external photosensor 42 and obtains an output value $AD_H$ of the ADC 13 (step S32). Similarly, the control unit 2 controls the backlight power supply circuit 10 to give the minimum brightness value (0%), obtains a luminance $L_{ML}$ of a substantially center part of the display surface of the liquid crystal panel 9 with the external photosensor 42 and obtains an output value $AD_L$ of the ADC 13 (step S33). The control unit 2 stores in the storage unit 36 the luminances $L_{MH}$, $L_{ML}$ and the output values $AD_H$, $AD_L$ obtained in the steps S32 and S33 (step S34).

The control unit 2 then outputs a signal, which gives an input level 0, 1, ..., 1023, to the source driver 8b, outputs an output voltage $V_0$, $V_1$, ..., $V_{1023}$ to the liquid crystal panel 9 to change the light transmittance of the liquid crystal material, and obtains a first color luminance $R_0$, $R_1$, ..., $R_{1023}$, a second color luminance $G_0$, $G_1$, ..., $G_{1023}$, and a third color luminance $B_0$, $B_1$, ..., $B_{1023}$ of a substantially center part of the display surface of the liquid crystal panel 9 in each case with the external photosensor 42 (step S35). The obtained first color luminance $R_0$, $R_1$, ..., $R_{1023}$, second color luminance $G_0$, $G_1$, ..., $G_{1023}$, and third color luminance $B_0$, $B_1$, ..., $B_{1023}$ are then normalized by dividing them respectively by the maximum luminance $R_{1023}$, $G_{1023}$ and $B_{1023}$, and the normalized first color luminance $R_0/R_{1023}$, $R_1/R_{1023}$, ..., $R_{1023}/R_{1023}$, second color luminance $G_0/G_{1023}$, $G_1/G_{1023}$, ..., $G_{1023}/G_{1023}$, and third color luminance $B_0/B_{1023}$, $B_1/B_{1023}$, ..., $B_{1023}/B_{1023}$ are stored in the storage unit 36 (step S36). A signal which gives an input level of 0, 1, ..., 1023 may be inputted externally from a PC or the like.

The control unit 2 then divides the first color luminance $R_{1023}$, the second color luminance $G_{1023}$ and the third color luminance $B_{1023}$ respectively by the luminance $L_{MH}$ and stores in the storage unit 36 $R_{1023}/L_{MH}$ (which will be hereinafter referred to as RR), $G_{1023}/L_{MH}$ (which will hereinafter referred to as GR) and $B_{1023}/L_{MH}$ (which will be hereinafter referred to as BR) (step S37). That is, a ratio of the luminance of the three primary colors RR:GR:BR is calculated. It should be noted that, though a ratio of the luminance is calculated in this example where the luminance liquid crystal material has the controllable maximum transmittance, a ratio of the luminance in a case where the liquid crystal material has a predetermined transmittance may be calculated.

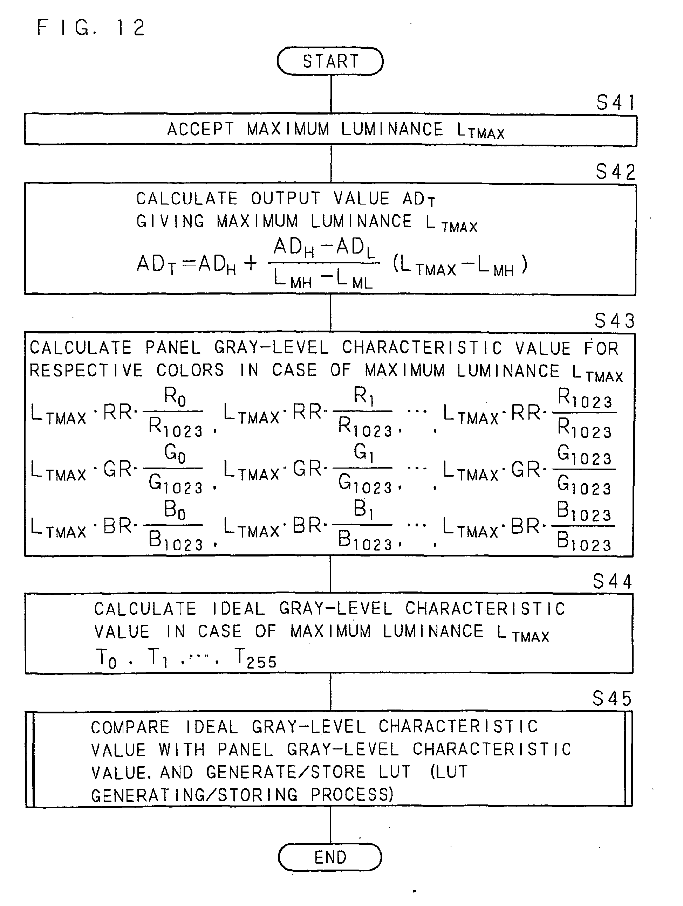

FIG. 12 is a flow chart showing an example of a second process procedure of the luminance control method for a liquid crystal display device according to Embodiment 2 of the present invention.

First, input of a desired maximum luminance $L_{TMAX}$ by the user of the liquid crystal display device 1 is accepted through the operation unit 5 (step S41). The control unit 2 then reads the luminances $L_{MH}$, $L_{ML}$ and output values $AD_H$, $AD_L$ stored in the storage unit 36 and calculates an output value $AD_T$ which gives the maximum luminance $L_{TMAX}$ based on the expression (4) from the read luminances $L_{MH}$, $L_{ML}$ and output values $AD_H$, $AD_L$ and the maximum luminance $L_{TMAX}$ accepted in the step S41 (step S42).

The control unit 2 then reads the normalized first color luminance $R_0/R_{1023}$, $R_1/R_{1023}$, ..., $R_{1023}/R_{1023}$, second color luminance $G_0/G_{1023}$, $G_1/G_{1023}$, ..., $G_{1023}/G_{1023}$, and third color luminance $B_0/B_{1023}$, $B_1/B_{1023}$, ..., $B_{1023}/B_{1023}$ stored in the storage unit 36 and calculates panel gray-level characteristic values for the respective colors $L_{TMAX}\cdot RR\cdot R_0/R_{1023}$, $L_{TMAX}\cdot RR\cdot R_1/R_{1023}$, ..., $L_{TMAX}\cdot RR\cdot R_{1023}/R_{1023}$, $L_{TMAX}\cdot GR\cdot G_0/G_{1023}$, $L_{TMAX}\cdot GR\cdot G_1/G_{1023}$, ..., $L_{TMAX}\cdot GR\cdot G_{1023}/G_{1023}$, and $L_{TMAX}\cdot BR\cdot B_0/B_{1023}$, $L_{TMAX}\cdot BR\cdot B_1/B_{1023}$, ..., $L_{TMAX}\cdot BR\cdot B_{1023}/B_{1023}$ in a case of the maximum luminance $L_{TMAX}$ by multiplying the read first color luminance $R_0/R_{1023}$, $R_1/R_{1023}$, ..., $R_{1023}/R_{1023}$, second color luminance $G_0 G_{1023}$, $G_1/G_{1023}$, ..., $G_{1023}/G_{1023}$, and third color luminance $B_0/B_{1023}$, $B_1/B_{1023}$, ..., $B_{1023}/B_{1023}$ by RR, GR and BR normalized in the step S37 and the maximum value $L_{TMAX}$ accepted in the step S41 (step S43).

The control unit 2 then calculates ideal gray-level characteristic values for the respective colors $TR_0$, $TR_1$, ..., $TR_{255}$, $TG_0$, $TG_1$, ..., $TG_{255}$, and $TB_0$, $TB_1$, ..., $TB_{255}$ in a case of the maximum luminance $L_{TMAX}$ based on the display function preliminarily stored in the storage unit 36 (step S44), compares the ideal gray-level characteristic values for the respective colors calculated in the step S44 with the panel gray-level characteristics for respective colors calculated in the step S43 to generate LUTs 36a, 36b and 36c, and stores them in the storage unit 36 (step S45). Since the LUT generating/storing process is the same as that of Embodiment 1, the explanation thereof is omitted.

It should be noted that, though a white screen is displayed by making the transmittance of all the pixels equal in order to obtain the first color luminance, the second color luminance and the third color luminance with the external photosensor 42 in this embodiment, a first color raster screen may be displayed by setting a voltage to be applied to pixels of the first color as $V_{1023}$ and setting a voltage to be applied to pixels of the other colors as $V_0$ in order to obtain the first color luminance with the external photosensor 42.

In this manner, a gray-level characteristic having superior accuracy can be realized since the effect of the luminance of the second color and the third color on the luminance of the first color can be removed even when the wavelength bands of the respective colors are broad and overlap with each other (the same for the second color luminance and the third color luminance).

Moreover, though the photosensor 12 converts the luminance in the wavelength band of visible light into an analog signal in the above description, the luminance-output value characteristic for each color may be obtained using a photosensor for converting the luminance in the wavelength band of each of the three primary colors into an analog signal having a voltage according to the luminance. It should be understood that in this case, the analog signal is converted into a digital signal by connecting an ADC corresponding to each color with the photosensor. It is needless to say that a plurality of photosensors for converting the luminance of each of wavelength bands into an analog signal may be used.

The above-mentioned process procedure may be executed for color temperatures, e.g. a blue base (12500K) and a clear base (7500K) respectively. In this case, the storage unit 36 stores in the first process procedure the luminances $L_{MH}$, $L_{ML}$ and the output values $AD_H$, $AD_L$ for each color temperature and the normalized first color luminance $R_0/R_{1023}$, $R_1/R_{1023}$, ..., $R_{1023}/R_{1023}$, second color luminance $G_0G_{1023}$, $G_1/G_{1023}$, ..., $G_{1023}/G_{1023}$, and third color luminance $B_0/B_{1023}$, $B_1/B_{1023}$, ..., $B_{1023}/B_{1023}$, selection of a desired color temperature by the user of the liquid crystal display device 1 is accepted through the operation unit 5 in the second process procedure, and a process is executed for the selected color temperature. It is needless to say that the color temperature is not limited to these two, and may be any color temperature.

Furthermore, though described in Embodiment 1 and Embodiment 2 is a manner that the control unit 2 in the liquid crystal display device executes the above software process to control luminance, a PC 21 connected with the liquid crystal device via a communication line compatible with the USB standard may perform a process similar to that of the above control unit 2. In this case, a necessary process may be executed by reading a recording medium such as a CD-ROM or a flexible disk (FD) in which the above process content is recorded as a computer program with a CD-ROM drive or a FD drive and by loading the read computer program to a memory. It is needless to say that the PC 21 may execute the process by downloading a computer program from a recording medium composed of a server device connected with a communication network such as a LAN via the communication network. Moreover, the PC 21 may comprise a storage unit for storing the above LUT 6a (36a, 36b, 36c), or the PC 21 may cause a storage unit in the liquid crystal display device to store the LUT 6a (36a, 36b, 36c).

**Claims**

1. A luminance control method for a liquid crystal display device (1, 31), which comprises a liquid crystal panel (9) and a backlight (11) disposed at the back of the liquid crystal panel (9), for controlling an input level of a video signal to be inputted into the liquid crystal panel (9) to control transmittance of the liquid crystal panel (9) and provide a gray-level display, the liquid crystal display device (1, 31) further comprising luminance detecting means (12, 13) for detecting a luminance of the backlight (11),
the luminance control method comprises the steps of:

measuring (S1, S2, S3, S32, S33) a luminance (LML, LMH) of light emitted from the backlight (11) through the liquid crystal panel (9) in a plurality of states wherein the liquid crystal panel (9) is set to a predetermined transmittance and the backlight (11) is set to different luminances (S2, S3), and preliminarily storing (S4) the luminance (LML, LMH) measured in each state associated with the luminance (ADL, ADH) detected by the luminance detecting means (12, 13);
measuring (S5, S35) a luminance (L0, L1, ..., L1023) of light emitted through the liquid crystal panel (9) for each panel input level, and preliminarily storing (S6) a panel luminance characteristic associating measured luminance values with panel input levels;
accepting (S11, S41) a desired luminance set value (LTMAX) of
light emitted through the liquid crystal panel (9) for a state wherein the liquid crystal panel (9) has a predetermined transmittance;

calculating (S12, S42) a luminance (ADT) to be detected by the luminance detecting means (12, 13), which corresponds to the desired luminance set value, (LTMAX), on the basis of the stored luminance data for said plurality of states, and controlling the luminance of the backlight (11) so as to be the calculated luminance (ADT);

calculating (S13, S43), for the desired luminance set value (LTMAX), a panel luminance characteristic associating a luminance of light emitted through the liquid crystal panel (9) in each panel input level, the calculation being based on the preliminarily stored panel luminance characteristic; and

calculating (S14, S44) values of an ideal luminance characteristic (T0, T1, ..., T255) for the desired luminance set value (LTMAX), the ideal luminance characteristic relating gray levels to luminances;

extracting (S15, S45), for each gray level, a panel input level from panel luminance characteristic calculated for the desired luminance set value (LTMAX), the extracted panel input level resulting in a minimum difference with the luminance of said ideal luminance characteristic for the gray level, and storing (S15, S45) the extracted panel of input levels in association with the corresponding gray levels; and

controlling the transmittance of the liquid crystal panel (9) for the input gray levels of the video signal using said stored extracted panel input levels and corresponding gray levels.

2. The luminance control method according to claim 1, wherein after the step of measuring (S5, S35) the luminance levels (L0, L1, ..., L1023) emitted through the liquid crystal panel for each panel input level, the measured luminance levels are normalized (S6, S36), and each normalized luminance is preliminarily stored in association with the panel input level which gives the luminance.

3. The luminance control method of claim 1 or 2, wherein the luminance set value (LTMAX) is a luminance in a state where the transmittance of the liquid crystal panel (9) is a controllable maximum transmittance.

4. The luminance control method according to any one of claims 1 through 3, wherein one state of the plurality of states is a state wherein the backlight (11) has a controllable maximum luminance and another state of the plurality of states is a state wherein the backlight (11) has a controllable minimum luminance.

5. A liquid crystal display device (1, 31), which comprises a liquid crystal panel (9) and a backlight (11) disposed at the back of the liquid crystal panel (9), said liquid crystal display device being arranged to control an input level of a video signal to be inputted to the liquid crystal panel (9) to control transmittance of the liquid crystal panel (9) and provide a gray-level display;

luminance detecting means (12, 13) arranged to detect a luminance of the backlight (11);

measuring means (22) arranged to measure the luminance of light through the liquid crystal panel;

first storage means (6, 36) arranged to preliminarily store first information, in which the luminance (ADL, ADH), detected by the luminance detecting means (12, 13) in a plurality of states wherein the liquid crystal panel (9) is set to a predetermined transmittance and the backlight (11) is set to different luminances (ADL, ADH), is associated with a luminance (LML, LMH) of light emitted from the backlight (11) through the liquid crystal panel (9);

accepting means (5b) arranged to accept a desired luminance set value (LTMAX) of light emitted through the liquid crystal panel (9) for a state wherein the liquid crystal panel (9) has a predetermined transmittance;

first calculating means (2) arranged to calculate a luminance (ADT) to be detected by the luminance detecting means (12, 13), which corresponds to the luminance set value (LTMAX) accepted by the accepting means (5b), on the basis of the first information stored in the first storage means (6, 36);

luminance control means (10) arranged to control the luminance of the backlight (11) so as to be the luminance (ADT) calculated by the first calculating means (2);

Wherein the first storage means (6, 36) further stores second information (L0/L1023, L1/L1023, ..., L1023/L1023) on a luminance of light emitted through the liquid crystal panel (9) in each panel input level, said second information representing a panel luminance characteristic, and the liquid crystal display device further comprising:

second calculating means (2) for calculating a luminance of light emitted through the liquid crystal panel (9) in each panel input level in a case of the luminance set value (LTMAX) accepted by the accepting means (5b) on the basis of said second information;

third calculating means (2) arranged to calculated values of an ideal luminance characteristic for the luminance set value (LTMAX) accepted by the accepting means (5b), the ideal luminance characteristic relating gray levels to luminances;

fourth calculating means (2) arranged to calculate a luminance difference between the values of the ideal luminance characteristic calculated by the third calculating means (2) and the luminance in each panel input level calculated by the second calculating means (2);

second storage means (6, 36) arranged to store panel input levels, which give minimum luminance differences as calculated by the fourth calculating means (2), in association with the corresponding gray levels; and control means (8) for controlling the transmittance of the liquid crystal panel (9) for the input gray levels of the video signal using corresponding panel input levels stored in said second storage means (6, 36).

6. The liquid crystal display device (1, 31) according to claim 5, wherein the luminance detecting means (12, 13) has: photoelectric conversion means (12) for converting the luminance of the backlight into an analog-type electric signal having a voltage corresponding to the luminance of the backlight (11); and analog-digital conversion means (13) for converting the converted analog-type electric signal into a digital-type electric signal.

7. A computer program for causing a computer to output control information to a liquid crystal display device (1, 31) comprising a liquid crystal panel (9) and a backlight (11) disposed at the back of the liquid crystal panel (9) and causing the computer to control an input level of a video signal to be inputted into the liquid crystal panel (9) to control transmittance of the liquid crystal panel (9) and provide a gray-level display, implementing the steps of:

causing the computer to store in a storage unit (6, 36) a luminance (ADL, ADH) of the backlight (11), in a plurality of states wherein the backlight (11) is set to different luminances, in association with corresponding luminances (LML, LMH) of light emitted from the backlight (11) through the liquid crystal panel (9);
causing the computer to accept a desired luminance set value (LTMAX) of light emitted through the liquid crystal panel (9);
causing the computer to calculate control information for controlling a luminance (ADT) of the backlight (11), which corresponds to the desired luminance set value (LTMAX), on the basis of first information stored in the storage unit (6, 36);
causing the computer to output the calculated control information to the liquid crystal display device (1, 31) the computer program further implementing the steps of:

causing the computer to store in the storage unit (6, 36) second information (L0/L1023; L1/L1023, ..., L1023/L1023) on a luminance of light emitted through the liquid crystal panel (9) in each panel input level, said second information representing a panel luminance characteristic;
causing the computer to calculate a luminance of light emitted through the liquid crystal panel (9) in each panel input level in a case of the inputted luminance set value (LTMAX) on the basis of the stored second information, so as to provide a panel luminance characteristic for the desired luminance set value (LTMAX);
causing the computer to calculate the values of an ideal luminance characteristic for the desired luminance set value (LTMAX), the ideal luminance characteristic relating gray levels to luminances;
causing the computer to calculate a luminance difference between the values of the ideal luminance characteristic and the luminance in each panel input level of the panel luminance characteristic calculated for the desired luminance set value (LTMAX); and
causing the computer to store in the storage unit (6, 36) for each gray level the associated panel input level, which gives the minimum calculated luminance difference.

**Patentansprüche**

1. Ein Luminanzsteuerverfahren für eine Flüssigkristallanzeigevorrichtung (1, 31) die einen Flüssigkristallschirm (9) und ein Hintergrundlicht (backlight) (11) auf der Rückseite des Flüssigkristallschirms (9) aufweist um ein Eingangsniveau eines Videosignals zu steuern, das in den Flüssigkristallschirm (9) eingegeben wird, um die Transmittanz des Flüssigkristallschirm (9) zu steuern und um eine Grau-Niveauanzeige bzw. Grau-Pegelanzeige vorzusehen, wobei die Flüssigkristallanzeigevorrichtung (1, 31) ferner Luminanzdetektionsmittel (12, 13) aufweist zum Detektieren einer Luminanz des Hintergrundlichtes (11),
wobei das Luminanzsteuerverfahren die folgenden Schritte aufweist:

Messen (S1, S2, S3, S32, S33) einer Luminanz (LML, LMH) des vom Hintergrundlicht (11) emittierten Lichtes durch den Flüssigkristallschirm (9) in einer Vielzahl von Zuständen, wobei der Flüssigkristallschirm (9) auf eine vorbestimmte Transmittanz eingestellt ist und das Hintergrundlicht (11) auf eine Luminanz (S2, S3) eingestellt ist und vorläufige Speicherung (S4) der Luminanz (LML, LMH) gemessen in jedem Zustand assoziiert mit der Luminanz (ADL, ADH) detektiert durch die Luminanzdetektionsmittel (12, 13);
Messen (S5, S35) einer Luminanz (L0, L1, ...., L1023) des durch den Flüssigkristallschirm (9) emittierten Lichtes für jeden Schirmeingangspegel und vorläufiges Speichern (S6) einer Schirmluminanzcharakteristik die gemessene Luminanzwerte mit Schirmeingangsniveaus oder Pegeln assoziiert;

Akzeptieren (S11, S41) eines gewünschten oder Sollluminanzeinstellwertes (LTMAX) von Licht emittiert durch den Flüssigkristallschirm (9) für einen Zustand wo der Flüssigkristallschirm (9) eine vorbestimmte Transmittanz besitzt;

Berechnen (S12, S42) einer Luminanz (ADT) die detektiert werden soll durch die Luminanzdetektionsmittel (12, 13), die dem Sollluminanzeinstellwert, (LTMAX), entspricht und zwar auf der Basis der gespeicherten Luminanzdaten für die erwähnte Vielzahl von Zuständen, und Steuern der Luminanz des Hintergrundlichts (11) um so die berechnete Luminanz (ADT) zu sein;

Berechnen (S13, S43) für den Sollluminanzeinstellwert (LTMAX) eine Schirmluminanzcharakteristik die eine Luminanz des Lichtes emittiert durch den Flüssigkristallschirm (9) assoziiert und zwar in jedem Schirmeingangsniveau oder Pegel, wobei die Berechnung auf der vorläufig gespeicherten Schirmluminanzcharakteristik basiert; und

Berechnen (S14, S44) von Werten einer idealen Luminanzcharakteristik (T0, T1, ..., T255) für den Sollluminanzeinstellwert (LTMAX), wobei die ideale Luminanzcharakteristik Graupegel mit den Luminanzen in Beziehung setzt;

Extrahieren (S15, S45), für jeden Graupegel, eines Schirmeingangsniveaus aus der Schirmluminanzcharakteristik berechnet für den Sollluminanzeinstellwert (LTMAX) wobei das extrahierte Schirmeingangsniveau in einer Minimaldifferenz resultiert mit der Luminanz der idealen Luminanzcharakteristik für den Graupegel, und Speichern (S15, S45) der extrahierten Schirmeingangsniveaus in Assoziierung mit den entsprechenden Graupegeln; und

Steuern der Transmittanz des Flüssigkristallschirms (9) für die Eingangsgraupegel des Videosignals unter Verwendung der erwähnten gespeicherten extrahierten Schirmeingangsniveaus und entsprechenden Graupegeln.

2. Luminanzsteuerverfahren nach Anspruch 1, wobei nach dem Schritt der Messung (S5, S35) der Luminanzpegel (L0, L1, ..., L1023) emittiert durch den Flüssigkristallschirm für jedes Schirmeingangsniveau die gemessenen Luminanzpegel normalisiert (S6, S36) werden und jede normalisierte Luminanz wird vorläufig in Assoziierung mit dem Schirmeingangsniveau welches die Luminanz angibt gespeichert.

3. Luminanzsteuerverfahren nach Anspruch 1 oder 2, wobei der Luminanzeintellwert (LTMAX) eine Luminanz in einem Zustand ist, wo die Transmittanz des Flüssigkristallschirms (9) eine steuerbare maximale Transmittanz ist.

4. Luminanzsteuerverfahren nach einem der Ansprüche 1 bis 3, wobei ein Zustand der Vielzahl von Zuständen ein Zustand ist, wo das Hintergrundlicht (11) eine steuerbare maximale Luminanz besitzt und ein weiterer Zustand der Vielzahl von Zuständen ein Zustand ist, wo das Hintergrundlicht (11) eine steuerbare minimale Luminanz besitzt.

5. Eine Flüssigkristallanzeigevorrichtung (1, 31) die einen Flüssigkristallschirm (9) und ein Hintergrundlicht (11) aufweist, und zwar angeordnet auf der Rückseite des Flüssigkristallschirms (9), wobei die Flüssigkristallanzeigevorrichtung angeordnet ist zur Steuerung eines Eingangsniveaus eines Videosignals, das in den Flüssigkristallschirm (9) eingegeben werden soll zur Steuerung der Transmittanz des Flüssigkristallschirms (9) und zum Vorsehen einer Grauniveauanzeige;

Luminanzdetektiermittel (12, 13) angeordnet zum Detektieren einer Luminanz des Hintergrundlichts (11);

Messmittel (22) angeordnet zur Messung des Luminanzlichtes durch den Flüssigkristallschirm;

erstes Speichermittel (6, 36) angeordnet zum vorläufigen Speichern erster Information in der die Luminanz (ADL, ADH) detektiert durch die Luminanzdetektiermittel (12, 13) in einer Vielzahl von Zuständen ist, wobei der Flüssigkristallschirm (9) eingestellt ist auf eine vorbestimmte Transmittanz und das Hintergrundlicht (11) eingestellt ist auf unterschiedliche Luminanzen (ADL, ADH) und zwar assoziiert mit der Luminanz (LML, LMH) des Lichtes emittiert vom Hintergrundlicht (11) durch den Flüssigkristallschirm (9);

Akzeptanzmittel (5b) angeordnet zum Akzeptieren eines Sollluminanzeinstellwertes (LTMAX) des durch den Flüssigkristallschirm (9) emittierten Lichtes für einen Zustand wo der Flüssigkristallschirm (9) eine vorbestimmte Transmittanz besitzt;

erste Berechnungsmittel (2) angeordnet zur Berechnung einer Luminanz (ADT) die detektiert werden soll durch die Luminanzdetektiermittel (12, 13), die den Luminanzeinstellwert (LTMAX) entspricht, akzeptiert durch die Akzeptanzmittel (5b) und zwar auf der Basis der ersten Information gespeichert in den ersten Speichermitteln (6, 36);

Luminanzsteuermittel (10) angeordnet zur Steuerung der Luminanz des Hintergrundlichts (11) um so die Luminanz (ADT) berechnet durch die ersten Berechnungsmittel (2) zu sein;

wobei die ersten Speichermittel (6, 36) ferner zweite Information (L0/L1023, L1/L1023, ..., L1023/L1023) speichern und zwar hinsichtlich einer Luminanz des Lichtes emittiert durch den Flüssigkristallschirm (9) in jedem Schirmeingangsniveau oder Pegel, wobei die zweite Information eine Schirmluminanzcharakteristik repräsentiert, und wobei die Flüssigkristallanzeigevorrichtung ferner Folgendes aufweist:

zweite Berechnungsmittel (2) zum Berechnen einer Luminanz des durch den Flüssigkristallschirm (9) emittierten Lichtes und zwar in jedem Schirmeingangsniveau in einem Fall des Luminanzeinstellwerts (LTMAX) akzeptiert durch die Akzeptanzmittel (5b) auf der Basis der erwähnten zweiten Information;

dritte Berechnungsmittel (2) angeordnet zur Berechnung von Werten einer Idealluminanzcharakteristik für den Luminanzeinstellwert (LTMAX) akzeptiert durch die Akzeptanzmittel (5b), wobei die Idealluminanzcharakteristik Graupegel mit den Luminanzen in Beziehung setzt;

vierte Berechnungsmittel (2) angeordnet zur Berechnung einer Luminanzdifferenz zwischen den Werten der idealen Luminanzcharakteristik berechnet durch die dritten Berechnungsmittel (2) und der Luminanz in jedem Schirmeingangsniveau berechnet durch die zweiten Berechnungsmittel (2);

zweite Speichermittel (6, 36) angeordnet zur Speicherung der Schirmeingangspegel die minimale Luminanzdifferenzen angeben und zwar berechnet durch die vierten Berechnungsmittel (2) in Assoziation mit den entsprechenden Graupegeln; und

Steuermittel (8) zur Steuerung der Transmittanz des Flüssigkristallschirms (9) für den eingegebenen Graupegel des Videosignals unter Verwendung entsprechender Schirmeingangspegel gespeichert in den zweiten Speichermitteln (6, 36)

6. Flüssigkristallanzeigevorrichtung (1, 31) gemäß Anspruch 5 wobei die Luminanzdetektiermittel (12, 13) fotoelektrische Umwandlungsmittel (12) aufweisen zur Umwandlung der Luminanz des Hintergrundlichtes in ein analoges elektrisches Signal mit einer Spannung entsprechend der Luminanz des Hintergrundlichts (11), und analoge Digitalumwandlungsmittel (13) zum Umwandeln des konvertierten analogen elektrischen Signals in ein digitales elektrisches Signal.

7. Ein Computerprogramm zur Veranlassung eines Computers eine Ausgangssteuerinformation an eine Flüssigkristallanzeigevorrichtung (1, 31) auszugeben, die einen Flüssigkristallschirm (9) und ein Hintergrundlicht (11) aufweist und zwar angeordnet auf der Rückseite des Flüssigkristallschirms (9) und veranlassen des Computers ein Eingangsniveau oder ein Eingangspegel eines Videosignals das in den Flüssigkristallschirm (9) eingegeben werden soll zu steuern, um die Transmittanz des Flüssigkristallschirms (9) zu steuern und eine Grauniveauanzeige vorzusehen, wobei die folgenden Schritte implementiert werden:

Bewirken dass der Computer in einer Speichereinheit (6, 36) eine Luminanz (ADL, ADH) des Hintergrundlichts (11) speichert und zwar in einer Vielzahl von Zuständen wobei das Hintergrundlicht (11) auf unterschiedliche Luminanzen eingestellt ist in Assoziation mit entsprechenden Luminanzen (LML, LMH) des von dem Hintergrundlicht (11) durch den Flüssigkristallschirm (9) emittierten Lichtes;

Bewirken dass der Computer einen Sollluminanzeinstellwert (LTMAX) des Lichts emittiert durch den Flüssigkristallschirm (9) akzeptiert;

Bewirken dass der Computer Steuerinformation berechnet und zwar zur Steuerung einer Luminanz (ADT) des Hintergrundlichts (11) welches dem Sollluminanzeinstellwert (LTMAX) entspricht und zwar auf der Basis erster Information gespeichert in der Speichereinheit (6, 36);

Bewirken dass der Computer die berechnete Steuerinformation ausgibt, und zwar an die Flüssigkristallanzeigevorrichtung (1, 31), wobei das Computerprogramm ferner die folgenden Schritte implementiert:

Bewirken dass der Computer in der Speichereinheit (6, 36) zweite Information (L0/L1023; L1/L1023, ..., L1023/L1023) speichert und zwar basierend auf einer Luminanz des Lichts emittiert durch den Flüssigkristallschirm (9) in jedem Schirmeingangsniveau, wobei die zweite Information eine Schirmluminanzcharakteristik repräsentiert;

Bewirken dass der Computer eine Luminanz des Lichtes emittiert durch den Flüssigkristallschirm (9) in jedem Schirmeingangsniveau oder Pegel berechnet und zwar in einem Fall des eingegebenen Luminanzeinstellwerts (LTMAX) auf der Basis der gespeicherten zweiten Information und so eine Schirmluminanzcharakteristik für den Sollluminanzeinstellwert (LTMAX) vorzusehen;

Bewirken dass der Computer die Werte einer idealen Luminanzcharakteristik für den Sollluminanzeinstellwert (LTMAX) berechnet wobei die ideale Luminanzcharakteristik die Grauniveaus mit den Luminanzen in Beziehung setzt;

Bewirken dass der Computer eine Luminanzdifferenz berechnet und zwar zwischen den Werten der idealen Luminanzcharakteristik und der Luminanz in jedem Schirmeingangsniveau der Schirmluminanzcharakteristik berechnet für den Sollluminanzeinstellwert (LTMAX); und

Bewirken dass der Computer in der Speichereinheit (6, 36) für jeden Graupegel den zugehörigen Schirmeingangspegel speichert der die minimale berechnete Luminanzdifferenz angibt.

**Revendications**

1. Procédé de contrôle de luminance pour un dispositif d'affichage à cristaux liquides (1, 31) qui comprend un panneau à cristaux liquides (9) et un éclairage arrière (11) disposé à l'arrière du panneau à cristaux liquides (9), pour contrôler le niveau d'entrée d'un signal vidéo à envoyer dans le panneau à cristaux liquides (9), pour commander la transmittance du panneau à cristaux liquides (9) et fournir un affichage en niveaux de gris, le dispositif d'affichage à cristaux liquides (1, 31) comprenant un moyen de détection de luminance (12, 13) pour détecter la luminance de l'éclairage arrière (11),
le procédé de contrôle de luminance comprenant les étapes suivantes :

mesurer (S1, S2, S3, S32, S33) la luminance (LML, LMH) de la lumière émise à partir de l'éclairage arrière (11) à travers le panneau à cristaux liquides (9) dans une pluralité d'états dans lesquels le panneau à cristaux liquides (9) est réglé à une transmittance prédéterminée et l'éclairage arrière (11) est réglé à différentes luminances (S2, S3), et mémoriser de façon préliminaire (S4) la luminance (LML, LMH) mesurée dans chaque état associé à la luminance (ADL, ADH) détectée par le moyen de détection de luminance (12, 13) ;
mesurer (S5, S35) la luminance (L0, L1, ..., L1023) de la lumière transmise à travers le panneau à cristaux liquides (9) pour chaque niveau d'entrée du panneau, et mémoriser de façon préliminaire (S6) une caractéristique de luminance du panneau associant des valeurs de luminance mesurées à des niveaux d'entrée du panneau ;
accepter (S11, S41) une valeur réglée de luminance désirée (LTMAX) de la lumière émise à travers le panneau à cristaux liquides (9) pour un état dans lequel le panneau à cristaux liquides (9) a une transmittance prédéterminée ;
calculer (S12, S42) une luminance (ADT) à détecter par le moyen de détection de luminance (12, 13) qui correspond à la valeur réglée de luminance désirée (LTMAX) sur la base des données de luminance mémorisées pour ladite pluralité d'états, et commander la luminance de l'éclairage arrière (11) pour qu'elle soit la luminance calculée (ADT) ;
calculer (S13, S43), pour la valeur réglée de luminance désirée (LTMAX), une caractéristique de luminance de panneau associant une luminance de lumière émise à travers le panneau à cristaux liquides (9) dans chaque niveau d'entrée du panneau, le calcul étant basé sur la caractéristique de luminance de panneau mémorisée au préalable ; et
calculer (S14, S44) des valeurs d'une caractéristique de luminance idéale (T0, T1, ..., T255) pour la valeur réglée de luminance désirée (LTMAX), la caractéristique de luminance idéale liant des niveaux de gris à des luminances ;
extraire (S15, S45) pour chaque niveau de gris un niveau d'entrée de panneau pour la caractéristique de luminance de panneau calculée à partir de la valeur réglée de luminance désirée (LTMAX), le niveau d'entrée extrait du panneau résultant en une différence minimum avec la luminance de la caractéristique de luminance idéale pour le niveau de gris, et mémoriser (S15, S45) les niveaux d'entrée extraits du panneau en association avec les niveaux de gris correspondants ; et
contrôler la transmittance du panneau à cristaux liquides (9) pour les niveaux de gris d'entrée du signal vidéo en utilisant les niveaux d'entrée de panneau extraits mémorisés et les niveaux de gris correspondants.

2. Procédé de contrôle de luminance selon la revendication 1, dans lequel, après l'étape de mesure (S5, S35) des niveaux de luminance (L0, L1, ..., L1023) émis à travers le panneau à cristaux liquides pour chaque niveau d'entrée de panneau, les niveaux de luminance mesurés sont normalisés (S6, S36) et chaque luminance normalisée est préalablement mémorisée en association avec le niveau d'entrée de panneau qui fournit la luminance.

3. Procédé de contrôle de luminance selon la revendication 1 ou 2, dans lequel la valeur réglée de luminance (LTMAX) est une luminance dans un état dans lequel la transmittance du panneau à cristaux liquides (9) est une transmittance maximum contrôlable.

4. Procédé de contrôle de luminance selon l'une quelconque des revendications 1 à 3, dans lequel un état de la pluralité d'états est un état dans lequel l'éclairage arrière (11) a une luminance maximum contrôlable et un autre état de la pluralité d'états est un état dans lequel l'éclairage arrière (11) a une luminance minimum contrôlable.

5. Dispositif d'affichage à cristaux liquides (1, 31) comprenant un panneau à cristaux liquides (9) et un éclairage arrière (11) disposés à l'arrière du panneau à cristaux liquides (9), le dispositif d'affichage à cristaux liquides étant disposé pour commander le niveau d'entrée d'un signal vidéo à introduire dans le panneau à cristaux liquides (9) pour contrôler la transmittance du panneau à cristaux liquides (9) et fournir un affichage à niveaux de gris ;
un moyen de détection de luminance (12, 13) agencé pour détecter la luminance de l'éclairage arrière (11) ;
un moyen de mesure (22) agencé pour mesurer la luminance de la lumière traversant le panneau à cristaux liquides ;
un premier moyen de mémoire (6, 36) agencé pour mémoriser de façon préalable une première information, dans lequel la luminance (ADL, ADH) détectée par le moyen de détection de luminance (12, 13) dans une pluralité d'états, dans lesquels le panneau à cristaux liquides (9) est réglé à une transmittance prédéterminée et l'éclairage arrière (11) est réglé à diverses luminances (ADL, ADH), est associée à une luminance (LML, LMH) de la lumière émise à partir de l'éclairage arrière (11) à travers le panneau à cristaux liquides (9) ;
un moyen d'acceptation (5b) agencé pour accepter une valeur réglée de luminance désirée (LTMAX) de lumière émise à travers le panneau à cristaux liquides (9) dans un état dans lequel le panneau à cristaux liquides (9) a une transmittance prédéterminée ;
un premier moyen de calcul (2) agencé pour calculer une luminance (ADT) à détecter par le moyen de détection de luminance (12, 13) qui correspond à la valeur réglée de luminance (LTMAX) acceptée par le moyen d'acceptation (5b) sur la base de la première information mémorisée dans le premier moyen de mémoire (6, 36) ;
un moyen de contrôle de luminance (10) agencé pour contrôler la luminance de l'éclairage arrière (11) pour qu'elle soit la luminance (ADT) calculée par le premier moyen de calcul (2) ;
dans lequel le premier moyen de mémoire (6, 36) mémorise en outre une seconde information (L0/L1023, L1/L1023, ..., L1023/L1023) sur la luminance de la lumière émise à travers le panneau à cristaux liquides (9) pour chaque niveau d'entrée du panneau, la seconde information représentant une caractéristique de luminance de panneau, et
le dispositif d'affichage à cristaux liquides comprenant en outre :

un deuxième moyen de calcul (2) pour calculer la luminance de la lumière émise à travers le panneau à cristaux liquides (9) pour chaque niveau d'entrée du panneau, dans le cas de la valeur réglée de luminance (LTMAX) acceptée par le moyen d'acceptation (5b) sur la base de la seconde information ;
un troisième moyen de calcul (2) agencé pour calculer des valeurs d'une caractéristique de luminance idéale pour la valeur réglée de luminance (LTMAX) acceptée par le moyen d'acceptation (5b), la caractéristique de la luminance idéale liant des niveaux de gris à des luminances ;
un quatrième moyen de calcul (2) agencé pour calculer une différence de luminance entre les valeurs de la caractéristique de luminance idéale calculée par le troisième moyen de calcul (2) et la luminance pour chaque niveau d'entrée du panneau calculée par le deuxième moyen de calcul (2) ;
un second moyen de mémoire (6, 36) agencé pour mémoriser des niveaux d'entrée de panneau qui fournissent des différences de luminance minimum telles que calculées par le quatrième moyen de calcul (2) en association avec les niveaux de gris correspondants ; et
des moyens de contrôle (8) pour contrôler la transmittance du panneau à cristaux liquides (9) pour le niveau de gris d'entrée du signal vidéo, en utilisant des niveaux d'entrée de panneau correspondants mémorisés dans le second moyen de mémoire (6, 36).

6. Dispositif d'affichage à cristaux liquides (1, 31) selon la revendication 5, dans lequel le moyen de détection de luminance (12, 13) comprend des moyens de conversion photo-électrique (12) pour convertir la luminance de l'éclairage arrière en un signal électrique de type analogique ayant une tension correspondant à la luminance de l'éclairage arrière (11), et un moyen de conversion analogique-numérique (13) pour convertir le signal électrique de type analogique converti en un signal électrique de type numérique.

7. Programme d'ordinateur pour amener un ordinateur à fournir des informations de contrôle à un dispositif d'affichage à cristaux liquides (1, 31) comprenant un panneau à cristaux liquides (9) et un éclairage arrière (11) disposés à l'arrière du panneau à cristaux liquides (9) et amener l'ordinateur à commander le niveau d'entrée d'un signal vidéo à envoyer dans le panneau à cristaux liquides (9) pour commander la transmittance du panneau à cristaux liquides (9) et fournir un affichage à niveaux de gris, mettant en oeuvre les étapes suivantes :

amener l'ordinateur à mémoriser dans un module mémoire (6, 36) la luminance (ADL, ADH) de l'éclairage arrière (11) dans une pluralité d'états dans lesquels l'éclairage arrière (11) est réglé à diverses luminances, en association avec des luminances correspondantes (LML, LMH) de la lumière émise à partir de l'éclairage arrière (11) à travers le panneau à cristaux liquides (9) ;
amener l'ordinateur à accepter une valeur réglée de luminance désirée (LTMAX) de lumière émise à travers le panneau à cristaux liquides (9) ;

amener l'ordinateur à calculer des informations de contrôle pour contrôler la luminance (ADT) de l'éclairage arrière (11), qui correspond à la valeur réglée de luminance désirée (LTMAX) sur la base de la première information mémorisée dans le module mémoire (6, 36) ;

amener l'ordinateur à fournir l'information de contrôle calculée au dispositif d'affichage à cristaux liquides (1, 31), le programme d'ordinateur mettant en outre en oeuvre les étapes suivantes :

amener l'ordinateur à mémoriser dans le module mémoire (6, 36) une seconde information (L0/L1023 ; L1/L1023, ..., L1023/L1023) sur la luminance de la lumière émise à travers le panneau à cristaux liquides (9) pour chaque niveau d'entrée du panneau, la seconde information représentant une caractéristique de luminance du panneau ;

amener l'ordinateur à calculer la luminance de la lumière émise à travers le panneau à cristaux liquides (9) pour chaque niveau d'entrée du panneau dans le cas de la valeur réglée de luminance (LTMAX) introduite sur la base de la seconde information mémorisée de façon à fournir une caractéristique de luminance de panneau pour la valeur réglée de luminance désirée (LTMAX) ;

amener l'ordinateur à calculer les valeurs d'une caractéristique de luminance idéale pour la valeur réglée de luminance désirée (LTMAX), la caractéristique de luminance liant les niveaux de gris à des luminances ;

amener l'ordinateur à calculer une différence de luminance entre les valeurs de la caractéristique de luminance idéale et la luminance pour chaque niveau d'entrée du panneau de la caractéristique de luminance de panneau calculée pour la valeur réglée de luminance désirée (LTMAX) ; et

amener l'ordinateur à mémoriser dans le module mémoire (6, 36) pour chaque niveau de gris le niveau d'entrée de panneau associé qui fournit la différence de luminance calculée minimum.

EP 1 713 055 B1

FIG. 1

20

F I G. 2

| INPUT LEVEL (—) | OUTPUT VOLTAGE (V) |
|---|---|
| 0000000000 (0) | $V_0$ |
| 0000000001 (1) | $V_1$ |
| 0000000010 (2) | $V_2$ |
| ⋮ | ⋮ |
| 1111111111 (1023) | $V_{1023}$ |

FIG. 3

```
              ┌─────────────┐
              │    START    │
              └──────┬──────┘
                     │                              S1
   ┌─────────────────┴─────────────────────────────┐
   │        LIGHT TRANSMITTANCE OF LIQUID           │
   │          CRYSTAL MATERIAL:MAXIMUM              │
   └─────────────────┬─────────────────────────────┘
                     │                              S2
   ┌─────────────────┴─────────────────────────────┐
   │ BRIGHTNESS:MAXIMUM                             │
   │ OBTAIN LUMINANCE L_MH AND OUTPUT VALUE AD_H   │
   └─────────────────┬─────────────────────────────┘
                     │                              S3
   ┌─────────────────┴─────────────────────────────┐
   │ BRIGHTNESS:MINIMUM                             │
   │ OBTAIN LUMINANCE L_ML AND OUTPUT VALUE AD_L   │
   └─────────────────┬─────────────────────────────┘
                     │                              S4
   ┌─────────────────┴─────────────────────────────┐
   │   STORE LUMINANCES L_MH , L_ML AND OUTPUT      │
   │   VALUES AD_H , AD_L INTO STORAGE UNIT         │
   └─────────────────┬─────────────────────────────┘
                     │                              S5
   ┌─────────────────┴─────────────────────────────┐
   │   OBTAIN LUMINANCE L_0 , L_1 ,⋯, L_1023        │
   │          IN EACH INPUT LEVEL                   │
   └─────────────────┬─────────────────────────────┘
                     │                              S6
   ┌─────────────────┴─────────────────────────────┐
   │ STORE NORMALIZED LUMINANCE                     │
   │                                                │
   │  L_0/L_1023, L_1/L_1023, ... L_1023/L_1023     │
   │                          INTO STORAGE UNIT     │
   └─────────────────┬─────────────────────────────┘
                     │
              ┌──────┴──────┐
              │     END     │
              └─────────────┘
```

$$\frac{L_0}{L_{1023}} , \frac{L_1}{L_{1023}} , \cdots \frac{L_{1023}}{L_{1023}}$$

F I G. 4

F I G. 5

F I G. 6

FIG. 7

```
          ( START )
```

S11

| ACCEPT MAXIMUM LUMINANCE $L_{TMAX}$ |

S12

CALCULATE OUTPUT VALUE $AD_T$
GIVING MAXIMUM LUMINANCE $L_{TMAX}$

$$AD_T = AD_H + \frac{AD_H - AD_L}{L_{MH} - L_{ML}} (L_{TMAX} - L_{MH})$$

S13

CALCULATE PANEL GRAY-LEVEL CHARACTERISTIC
VALUE IN CASE OF MAXIMUM LUMINANCE $L_{TMAX}$

$$L_{TMAX} \cdot \frac{L_0}{L_{1023}}, \quad L_{TMAX} \cdot \frac{L_1}{L_{1023}}, \quad \cdots, \quad L_{TMAX} \cdot \frac{L_{1023}}{L_{1023}}$$

S14

CALCULATE IDEAL GRAY-LEVEL CHARACTERISTIC
VALUE IN CASE OF MAXIMUM LUMINANCE $L_{TMAX}$
$T_0, T_1, \cdots, T_{255}$

S15

COMPARE IDEAL GRAY-LEVEL CHARACTERISTIC
VALUE WITH PANEL GRAY-LEVEL CHARACTERISTIC
VALUE, AND GENERATE/STORE LUT (LUT
GENERATING/STORING PROCESS)

```
           ( END )
```

F I G. 8

| LUMINANCE LEVEL (−) | MAXIMUM LUMINANCE $L_{TMAX}$ (cd/m$^2$) |
|---|---|
| 1 | 600 |
| 2 | 500 |
| 3 | 400 |
| ⋮ | ⋮ |

F I G. 9

$$\left( \text{LUT GENERATING/STORING PROCESS} \right)$$

S21

CALCULATE DIFFERENTIAL VALUE $\left( T_i - L_{TMAX} \cdot \dfrac{L_j}{L_{1023}} \right)$ BETWEEN IDEAL GRAY-LEVEL CHARACTERISTIC VALUE AND PANEL GRAY-LEVEL CHARACTERISTIC VALUE

S22

EXTRACT COMBINATION OF GRAY LEVEL i AND INPUT LEVEL j. GIVING MINIMUM ABSOLUTE VALUE OF DIFFERENTIAL VALUE $\left| T_i - L_{TMAX} \cdot \dfrac{L_j}{L_{1023}} \right|$

S23

STORE GRAY LEVEL i AS INDEX AND INPUT LEVEL j AS VALUE INTO STORAGE UNIT

$$\left( \text{RETURN} \right)$$

FIG. 10

F I G. 1 1

START

S 3 1

LIGHT TRANSMITTANCE OF LIQUID
CRYSTAL MATERIAL : MAXIMUM

S 3 2

BRIGHTNESS : MAXIMUM
OBTAIN LUMINANCE $L_{MH}$ AND OUTPUT VALUE $AD_H$

S 3 3

BRIGHTNESS : MINIMUM
OBTAIN LUMINANCE $L_{ML}$ AND OUTPUT VALUE $AD_L$

S 3 4

STORE LUMINANCES $L_{MH}$ . $L_{ML}$ AND OUTPUT
VALUES $AD_H$ . $AD_L$ INTO STORAGE UNIT

S 3 5

OBTAIN FIRST COLOR LUMINANCE $R_0$ . $R_1$ . $\cdots$ . $R_{1023}$ .
SECOND COLOR LUMINANCE $G_0$ . $G_1$ . $\cdots$ . $G_{1023}$ .
AND THIRD COLOR LUMINANCE $B_0$ . $B_1$ . $\cdots$ . $B_{1023}$
IN EACH INPUT LEVEL

S 3 6

STORE NORMALIZED FIRST COLOR LUMINANCE
$$\frac{R_0}{R_{1023}} . \frac{R_1}{R_{1023}} . \cdots . \frac{R_{1023}}{R_{1023}} .$$
NORMALIZED SECOND COLOR LUMINANCE
$$\frac{G_0}{G_{1023}} . \frac{G_1}{G_{1023}} . \cdots . \frac{G_{1023}}{G_{1023}} .$$
AND NORMALIZED THIRD COLOR LUMINANCE
$$\frac{B_0}{B_{1023}} . \frac{B_1}{B_{1023}} . \cdots . \frac{B_{1023}}{B_{1023}}$$
INTO STORAGE UNIT

S 3 7

CALCULATE $\dfrac{R_{1023}}{L_{MH}}$ (RR) . $\dfrac{G_{1023}}{L_{MH}}$ (GR) . $\dfrac{B_{1023}}{L_{MH}}$ (BR)
AND STORE THEM INTO STORAGE UNIT

END

FIG. 12

START

S41

ACCEPT MAXIMUM LUMINANCE $L_{TMAX}$

S42

CALCULATE OUTPUT VALUE $AD_T$
GIVING MAXIMUM LUMINANCE $L_{TMAX}$

$$AD_T = AD_H + \frac{AD_H - AD_L}{L_{MH} - L_{ML}} (L_{TMAX} - L_{MH})$$

S43

CALCULATE PANEL GRAY-LEVEL CHARACTERISTIC VALUE FOR
RESPECTIVE COLORS IN CASE OF MAXIMUM LUMINANCE $L_{TMAX}$

$$L_{TMAX} \cdot RR \cdot \frac{R_0}{R_{1023}}, \quad L_{TMAX} \cdot RR \cdot \frac{R_1}{R_{1023}}, \quad \cdots \quad L_{TMAX} \cdot RR \cdot \frac{R_{1023}}{R_{1023}}$$

$$L_{TMAX} \cdot GR \cdot \frac{G_0}{G_{1023}}, \quad L_{TMAX} \cdot GR \cdot \frac{G_1}{G_{1023}}, \quad \cdots \quad L_{TMAX} \cdot GR \cdot \frac{G_{1023}}{G_{1023}}$$

$$L_{TMAX} \cdot BR \cdot \frac{B_0}{B_{1023}}, \quad L_{TMAX} \cdot BR \cdot \frac{B_1}{B_{1023}}, \quad \cdots \quad L_{TMAX} \cdot BR \cdot \frac{B_{1023}}{B_{1023}}$$

S44

CALCULATE IDEAL GRAY-LEVEL CHARACTERISTIC
VALUE IN CASE OF MAXIMUM LUMINANCE $L_{TMAX}$
$$T_0, T_1, \cdots, T_{255}$$

S45

COMPARE IDEAL GRAY-LEVEL CHARACTERISTIC
VALUE WITH PANEL GRAY-LEVEL CHARACTERISTIC
VALUE. AND GENERATE/STORE LUT (LUT
GENERATING/STORING PROCESS)

END

FIG. 13

FIG. 14

| GRAY LEVEL (INDEX) | INPUT LEVEL (VALUE) |
|---|---|
| 00000000 (0) | 0000000000 (0) |
| 00000001 (1) | 0000000101 (5) |
| 00000010 (2) | 0000001000 (8) |
| 00000011 (3) | 0000001001 (9) |
| ⋮ | ⋮ |
| 11111111 (255) | 1111111111 (1023) |

F I G. 1 5

(a)                           (b)

DATA BEFORE                   DATA AFTER
CONVERSION                    CONVERSION

| 0 | 1 | 2 | 1 |
|---|---|---|---|
| 0 | 2 | 3 | 2 |
| 0 | 1 | 1 | 1 |
| 1 | 1 | 0 | 0 |

⟹

| 0 | 5 | 8 | 5 |
|---|---|---|---|
| 0 | 8 | 9 | 8 |
| 0 | 5 | 5 | 5 |
| 5 | 5 | 0 | 0 |

F I G. 1 6

FIG. 17

FIG. 18

FIG. 19

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002099238 A
- US 2001008395 A
- US 6297791 B